(19) Europäisches Patentamt
European Patent Office
Office européen des brevets

(11) **EP 2 228 628 B1**

(12) **FASCICULE DE BREVET EUROPEEN**

(45) Date de publication et mention
de la délivrance du brevet:
**28.09.2011 Bulletin 2011/39**

(51) Int Cl.:
***G01D 5/241*** *(2006.01)*

(21) Numéro de dépôt: **09154775.2**

(22) Date de dépôt: **10.03.2009**

(54) **Circuit électronique à capteur capacitif pour la mesure d'un paramètre physique, et procédé de mise en action du circuit électronique**

Elektronischer Schaltkreis mit kapazitivem Sensor zur Messung eines physikalischen Parameters und Verfahren zur Ingangsetzung des elektronischen Schaltkreises

Electronic circuit with a capacitive sensor for measuring a physical parameter, and method for activating the electronic circuit

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(43) Date de publication de la demande:
**15.09.2010 Bulletin 2010/37**

(73) Titulaire: **EM Microelectronic-Marin SA**
**2074 Marin (CH)**

(72) Inventeurs:
• **Deschildre, Alexandre**
**2074, Marin (CH)**

• **Grosjean, Sylvain**
**25500, Les Fins (FR)**
• **Willemin, Michel**
**2515, Prêles (CH)**

(74) Mandataire: **Ravenel, Thierry Gérard Louis et al**
**ICB**
**Ingénieurs Conseils en Brevets SA**
**Faubourg de l'Hôpital 3**
**2001 Neuchâtel (CH)**

(56) Documents cités:
**EP-A- 0 723 166      EP-A- 1 835 263**
**DE-A1- 3 942 159      FR-A- 2 486 232**
**US-A- 5 451 940**

**Description**

L'invention concerne un circuit électronique à capteur capacitif pour la mesure d'un paramètre physique, tel qu'une accélération, une vitesse angulaire, une force ou une pression. Le capteur capacitif est composé de deux condensateurs montés en différentiel dont une électrode commune est susceptible de se déplacer entre deux électrodes fixes sous l'action par exemple d'une force afin de modifier la valeur capacitive de chaque condensateur.

L'invention concerne également un procédé de mise en action du circuit électronique.

Habituellement dans de tels capteurs capacitifs pour la mesure d'un paramètre physique, l'électrode commune mobile fait partie d'une armature maintenue élastiquement entre les deux électrodes fixes. Cette électrode commune est susceptible de se déplacer d'une certaine distance en direction de l'une ou l'autre des électrodes fixes sous l'action d'une force par exemple. Au repos, l'électrode commune se trouve idéalement à égale distance de l'une et de l'autre électrode fixe, ce qui définit des valeurs capacitives égales des deux condensateurs. Lorsque l'électrode commune se déplace sous l'action par exemple d'une force, la valeur capacitive de chaque condensateur varie inversement. Une interface reliée au capteur capacitif du circuit électronique est destinée à fournir un signal de sortie sous la forme d'une tension dépendant de la variation des capacités des condensateurs.

Dans un cas idéal, la tension de sortie varie de manière linéaire par rapport au déplacement de l'électrode commune mobile. Toutefois comme les parties du circuit électronique sont réalisées sous forme d'au moins un circuit intégré dans un substrat semi-conducteur, il doit être tenu compte de capacités parasites, qui s'ajoutent aux capacités des condensateurs. Ces capacités parasites ne dépendent pratiquement pas du déplacement de l'électrode commune, ce qui crée des non-linéarités. De ce fait, la tension de sortie du circuit électronique ne varie pas linéairement par rapport au déplacement de l'électrode commune mobile. Ces condensateurs parasites ont également pour effet de faire baisser la sensibilité ou le gain du circuit électronique.

Comme le capteur du type MEMS peut être intégré également dans un substrat semi-conducteur, tel qu'un substrat en Silicium, il survient également un problème de non-linéarité lié au potentiel du substrat lors du fonctionnement du capteur. Ce potentiel de substrat est difficile à contrôler sur toute la structure dudit capteur, car le substrat n'est jamais totalement conducteur. Du fait de cette non-linéarité, la force électrostatique mesurée n'est pas nulle dans un mode de repos du circuit électronique. De par l'influence du potentiel du substrat sur la force électrostatique, cela conduit à une variation de la force réelle mesurée, qui est appliquée sur l'électrode commune mobile, ce qui constitue un inconvénient du circuit électronique. De plus, il doit être tenu compte d'une influence également de condensateurs parasites en parallèle des condensateurs du capteur. Les capacités des condensateurs parasites sont supposées quasi-constantes et indépendantes de la force appliquée au circuit électronique. Cela a pour effet de diminuer la sensibilité ou le gain du circuit électronique, ce qui constitue un autre inconvénient du circuit électronique à capteur capacitif.

Pour effectuer généralement une mesure d'une force, d'une accélération ou d'une pression, les électrodes fixes des deux condensateurs sont polarisées ou excitées cycliquement par des tensions de polarité opposée par rapport à une tension de référence au repos. En polarisant les deux électrodes fixes à des niveaux de tension différents, la différence de charges sur l'électrode mobile peut être mesurée et convertie en une tension en sortie du circuit électronique. Lorsque la tension de sortie est stabilisée à sa valeur finale, la charge totale sur l'électrode mobile devient nulle. Cette tension de sortie peut être fournie échantillonnée à un circuit de traitement susceptible de fournir des données d'accélération, de force, de pression ou également de vitesse angulaire selon la structure du capteur.

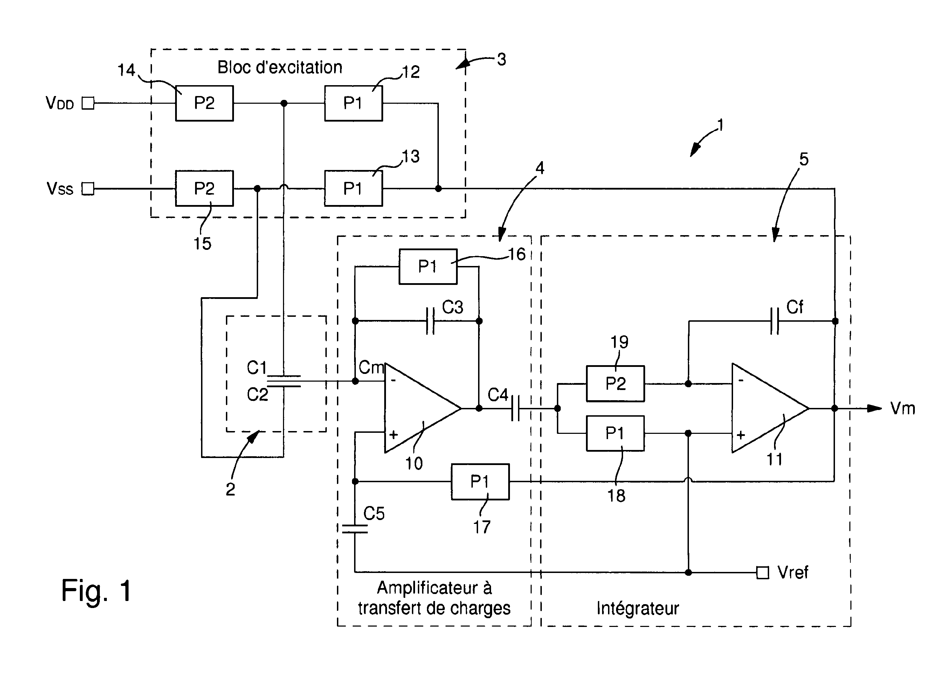

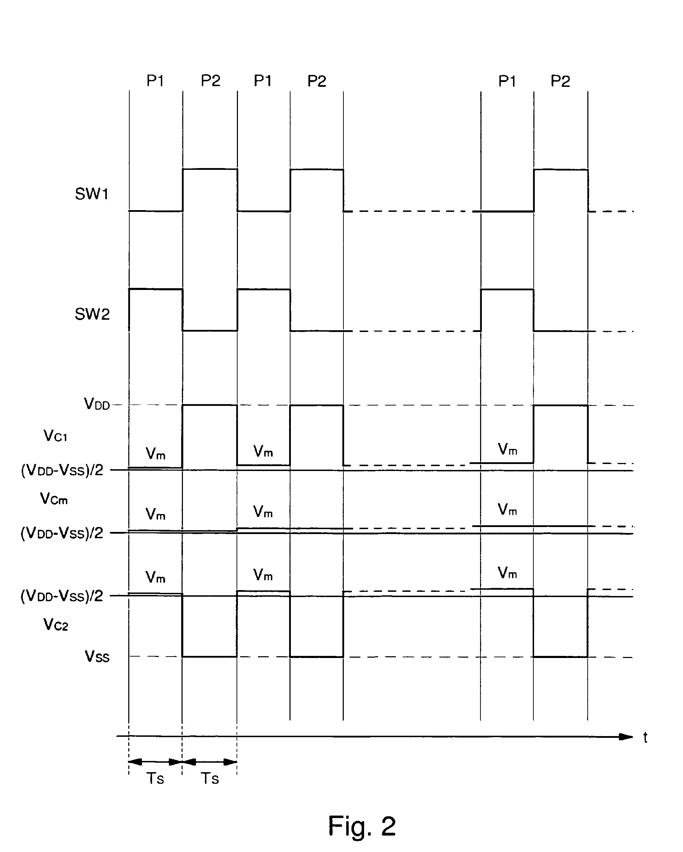

Un circuit électronique à capteur capacitif de l'art antérieur est représenté à la figure 1, ainsi que sa mise en action illustrée par un diagramme temporel de différents signaux de tension à la figure 2. Le circuit électronique représenté se base sur un circuit électronique décrit dans l'article rédigé par MM. H. Leuthold et F. Rudolph, qui est paru dans la revue intitulée "Sensors and actuators" A21-A23 (1990), pages 278 à 281.

Le circuit électronique 1 représenté comprend une interface reliée à un capteur capacitif 2, qui comprend deux condensateurs C1 et C2 montés en différentiel. Les deux condensateurs ont une électrode commune Cm susceptible de se déplacer entre deux électrodes fixes. L'interface du circuit électronique 1 comprend un bloc amplificateur à transfert de charges 4, qui est relié en entrée à l'électrode commune Cm, un bloc intégrateur 5 pour fournir en permanence en sortie une tension Vm égale à l'intégrale des charges fournies par le bloc amplificateur 4, et un bloc d'excitation 3 pour cycliquement polariser les électrodes fixes à des niveaux de tension déterminés.

Le bloc d'excitation 3 comprend quatre interrupteurs 12, 13, 14 et 15, qui peuvent être formés par des transistors MOS de commutation dans le circuit intégré. Le premier interrupteur 12 est disposé entre la sortie du bloc intégrateur 5 et l'électrode fixe du condensateur C1. Le second interrupteur 13 est disposé entre la sortie du bloc intégrateur et l'électrode fixe du condensateur C2. Le troisième interrupteur 14 est disposé entre la borne de tension haute $V_{DD}$ d'une source de tension continue et l'électrode fixe du condensateur C1. Finalement, le quatrième interrupteur 15 est disposé entre la borne de tension basse $V_{SS}$ de la source de tension et l'électrode fixe du condensateur C2.

Dans un mode de fonctionnement du circuit électronique, chaque cycle ou période de mesure successif est divisé en deux phases P1 et P2 comme montré à la figure 2. Le passage d'une phase à l'autre est commandé par des signaux d'horloge non représentés de manière à respectivement ouvrir ou fermer les interrupteurs. Les interrupteurs 12 et 13 sont fermés par des signaux SW2 à l'état "1" dans la première phase notée P1 aux figures 1 et 2, alors que les interrupteurs 14 et 15 sont ouverts dans cette première phase P1. Dans cette première phase P1, la tension Vm présente en sortie du bloc intégrateur est appliquée à chaque électrode du capteur pour décharger complètement les deux condensateurs comme montré par les diagrammes des tensions $V_{C1}$, $V_{Cm}$ et $V_{C2}$.

Les interrupteurs 14 et 15 sont fermés par des signaux SW1 à l'état "1" dans la seconde phase notée P2, alors que les interrupteurs 12 et 13 sont ouverts. Dans cette seconde phase P2, la tension $V_{DD}$ est appliquée à l'électrode fixe C1 vue au diagramme de $V_{C1}$, alors que la tension Vss est appliquée à l'électrode fixe C2 vue au diagramme de $V_{C2}$. Si l'électrode mobile s'est déplacée d'une certaine distance en direction de l'une ou l'autre des électrodes fixes, les capacités des condensateurs vont varier inversement. Ceci conduira à une différence de charges accumulées par chaque condensateur, qui dépend également de la tension Vm appliquée précédemment à chaque électrode des condensateurs.

La valeur finale de la tension Vm en sortie du bloc intégrateur est obtenue après plusieurs cycles de fonctionnement du circuit électronique en fonction du déplacement de l'électrode mobile entre les deux électrodes fixes comme montré sur le diagramme de la tension $V_{Cm}$. Dans ce cas de figure, l'électrode commune s'est déplacée en direction de l'électrode fixe du condensateur C1, ce qui conduit à obtenir une tension finale de sortie du bloc intégrateur, qui se trouve au-dessus de la tension milieu ou intermédiaire $(V_{DD}-V_{SS})/2$. Le potentiel de l'électrode commune a été ainsi ajusté pour annuler tout écoulement de charges et donc maintenir nulle la charge totale selon le principe de la compensation des charges.

Pour l'opération de transfert de charges accumulées par l'électrode commune Cm, le bloc amplificateur à transfert de charges 4 comprend un amplificateur opérationnel 10, trois condensateurs C3, C4 et C5 et deux interrupteurs 16 et 17. L'entrée inverseuse de cet amplificateur est reliée à l'électrode commune Cm. Le condensateur C3 en parallèle avec l'interrupteur 16 sont connectés entre l'entrée inverseuse et la sortie de l'amplificateur 10. Le condensateur C4 est relié entre la sortie de l'amplificateur 10 et l'entrée du bloc intégrateur 5. Le condensateur C5 est connecté entre l'entrée non-inverseuse et une borne de tension de référence Vref, qui peut être définie comme une masse DC égale à $V_{SS}$ ou $(V_{DD}-V_{SS})/2$ ou à un autre potentiel. Finalement, l'interrupteur 17 est disposé entre la sortie du bloc intégrateur 5 et l'entrée non-inverseuse de l'amplificateur 10.

Dans le mode de fonctionnement du circuit électronique, les deux interrupteurs 16 et 17 sont fermés par des signaux SW2 à l'état "1" dans la première phase P1 pour d'une part décharger le condensateur C3 et polariser le condensateur C5 avec la tension de sortie Vm à l'entrée non-inverseuse de l'amplificateur. Le niveau de tension Vm du condensateur C5 est maintenu durant la seconde phase P2.

Le bloc intégrateur 5, qui suit le bloc amplificateur à transfert de charges 4, comprend deux interrupteurs d'entrée 18 et 19, un amplificateur opérationnel 11 et un condensateur d'intégration Cf. Ce condensateur Cf est connecté entre l'entrée inverseuse et la sortie de l'amplificateur 11, qui fournit la tension de sortie Vm de l'intégrateur 5. L'interrupteur d'entrée 18 est disposé entre la borne de sortie du condensateur C4 du bloc à transfert de charges 4 et l'entrée non-inverseuse de l'amplificateur 11. Le potentiel de cette entrée non-inverseuse de l'amplificateur 11 est fixé à la tension de référence Vref. L'interrupteur 19 est disposé entre la borne de sortie du condensateur C4 du bloc à transfert de charges 4 et l'entrée inverseuse de l'amplificateur 11.

Dans le mode de fonctionnement du circuit électronique, l'interrupteur 18 est fermé par des signaux SW2 à l'état "1" dans la première phase P1 pour que la tension aux bornes du condensateur C4 du bloc à transfert de charges soit égale à Vm si la tension de référence Vref est à la masse. L'interrupteur 19 est pour sa part fermé par des signaux SW1 à l'état "1" dans la seconde phase P2 pour opérer un écoulement de charges entre la borne de sortie du condensateur C4 du bloc à transfert de charges 4 et l'intégrateur 5. Cet écoulement de charges provenant du bloc amplificateur à transfert de charges 4 est intégré dans le condensateur Cf. Ainsi, la tension de sortie Vm est mise à jour, c'est-à-dire modifiée d'une quantité proportionnelle à la charge accumulée sur l'électrode mobile commune durant la seconde phase.

Le fonctionnement du circuit électronique décrit ci-dessus est du type asymétrique, car l'électrode fixe du condensateur C1 est toujours polarisée au même potentiel $V_{DD}$ dans chaque seconde phase P2, alors que l'électrode fixe du condensateur C2 est toujours polarisée à $V_{SS}$ dans chaque seconde phase P2. Ce type de circuit électronique intégré rencontre donc les mêmes problèmes de non-linéarités mentionnés ci-dessus relatifs aux condensateurs parasites et au potentiel de substrat, ce qui est un inconvénient. De plus, comme le circuit électronique est réalisé sous forme de circuit intégré, tout écart de tension lié aux composants électroniques non appariés ne peut être éliminé, ce qui constitue un autre inconvénient.

Une manière d'améliorer des non-linéarités dans le circuit électronique à capteur capacitif, a été proposée dans le document de brevet FR 2 720 510, sur lequel se base le circuit électronique de la présente invention. La différence de ce circuit électronique présenté par rapport à celui décrit ci-devant en référence à la figure 1, est qu'il comprend avantageusement encore un condensateur de compensation Cc placé en entrée du bloc intégrateur. Ce condensateur de compensation permet principalement de compenser les effets de condensateurs parasites, notamment ceux du capteur capacitif afin d'augmenter le gain du circuit électronique. Toutefois ce circuit électronique ne permet pas d'éviter un éventuel blocage ou verrouillage de la sortie du circuit électronique vers le potentiel haut ou le potentiel bas de la source de tension d'alimentation suite à une variation brutale, telle qu'un choc appliqué au capteur, en dehors de la gamme de mesure du circuit électronique. Ceci entraîne une saturation de l'interface du circuit électronique, ce qui constitue un inconvénient. Même si l'amplitude forte disparaît, cette saturation de l'interface reste permanente, ce qui implique que le circuit électronique n'est plus fonctionnel. Avec cela, il est ainsi nécessaire d'opérer une initialisation complète du circuit électronique afin qu'il opère correctement, ce qui occasionne un temps de mise en fonction relativement grand et une consommation électrique plus importante.

L'invention a donc pour but principal de fournir un circuit électronique à capteur capacitif pour la mesure d'un paramètre physique qui permet de pallier aux inconvénients cités ci-dessus afin d'empêcher notamment tout blocage ou verrouillage de la sortie suite à une variation brutale, telle qu'un choc appliqué au capteur.

A cet effet, l'invention concerne un circuit électronique à capteur capacitif cité ci-devant, qui comprend les caractéristiques mentionnées dans la revendication indépendante 1.

Des formes d'exécution spécifiques du circuit électronique sont définies dans les revendications dépendantes 2 à 7.

Un avantage du circuit électronique réside dans le fait que le moyen de comparaison permet d'empêcher rapidement tout blocage ou verrouillage de la sortie à une tension haute ou à une tension basse suite à une variation brutale, telle qu'un choc appliqué au capteur lors d'une mesure d'une force. Grâce au moyen de comparaison, tel qu'un comparateur dynamique, il n'est plus nécessaire d'opérer une réinitialisation complète du circuit électronique en cas d'un blocage de la sortie à une tension au-delà d'un seuil de tension déterminé. La tension de sortie est ainsi comparée à une tension de comparaison déterminée dans une période ou cycle de comparaison. Comme chaque cycle de mesure du circuit électronique peut être composé de deux phases de durée déterminée, la période de comparaison peut correspondre à trois cycles, c'est-à-dire à six fois la durée de chaque phase. Une déconnexion par exemple du condensateur de compensation peut intervenir si l'écart entre la tension de sortie et la tension de comparaison se trouve au-delà du seuil de tension déterminé, en dehors de la gamme de mesure.

Avantageusement, le circuit électronique peut être composé d'une double structure avec deux blocs intégrateurs et deux blocs d'excitation à fonctionnement alternatif totalement symétrique. Grâce à cela, une compensation d'un écart de tension dû à la technologie ou à la variation de tension d'alimentation peut être minimisé voire supprimé à l'aide des deux signaux de sortie des blocs intégrateurs. Lors du fonctionnement de ce circuit électronique, chaque cycle de mesure est divisé en quatre phases successives, dont deux phases successives pour chaque bloc intégrateur. Dans ce cas, une comparaison entre les tensions de sortie des deux intégrateurs peut être effectuée par un comparateur dynamique. Comme chaque cycle de mesure peut être composé de quatre phases successives, la période de comparaison pour ce circuit électronique correspond à trois cycles de mesure, c'est-à-dire à douze fois la durée de chaque phase. Une déconnexion des deux condensateurs de compensation en entrée des blocs intégrateurs intervient si l'écart entre les deux tensions de sortie se trouve au-delà d'un seuil de tension déterminé, en dehors de la gamme de mesure.

A cet effet, l'invention concerne également un procédé de mise en action du circuit électronique de mesure d'un paramètre physique, qui comprend les caractéristiques définies dans la revendication 8.

Des étapes particulières avantageuses du procédé sont définies dans les revendications dépendantes 9 à 11.

Les buts, avantages et caractéristiques du circuit électronique à capteur capacitif pour la mesure d'un paramètre physique, ainsi que du procédé de mise en action dudit circuit électronique apparaîtront mieux dans la description suivante en regard des dessins sur lesquels :

- la figure 1 déjà citée représente de manière simplifiée un circuit électronique à capteur capacitif de l'art antérieur,
- la figure 2 déjà citée représente un diagramme temporel de différents signaux de tension durant plusieurs cycles de mesure chacun divisés en deux phases du procédé de mise en action du circuit électronique de la figure 1 selon l'art antérieur,
- la figure 3 représente de manière simplifiée une première forme d'exécution d'un circuit électronique à capteur capacitif selon l'invention,
- les figures 4a et 4b représentent d'une part de manière simplifiée une forme d'exécution d'un comparateur dynamique pour le circuit électronique de la figure 3 selon l'invention, et d'autre part un diagramme temporel de signaux de commande d'interrupteurs et de cadencement du comparateur dynamique du circuit électronique selon l'invention,
- la figure 5 représente de manière simplifiée une seconde forme d'exécution d'un circuit électronique à capteur capacitif selon l'invention,
- la figure 6 représente un diagramme temporel de différents signaux de tension durant plusieurs cycles de mesure chacun divisés en quatre phases du procédé de mise en action du circuit électronique de la figure 5 selon l'invention, et
- les figures 7a et 7b représentent d'une part de manière simplifiée une forme d'exécution d'un comparateur dynamique pour le circuit électronique de la figure 5 selon l'invention, et d'autre part un diagramme temporel de signaux de commande d'interrupteurs et de cadencement du comparateur dynamique du circuit électronique selon l'invention.

Dans la description suivante comme différents composants du circuit électronique à capteur à condensateurs différentiels sont bien connus, ils ne seront pas explicités de manière détaillée.

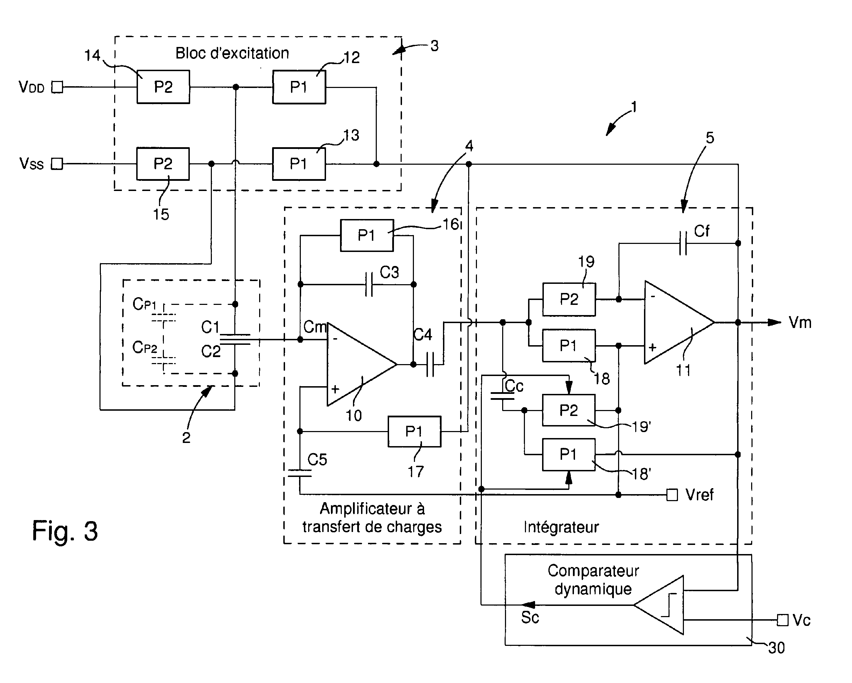

La figure 3 montre un schéma simplifié des différents composants d'une première forme d'exécution du circuit électronique 1 à capteur capacitif 2 selon l'invention. Ce circuit électronique 1 se différencie du circuit électronique de l'art antérieur présenté à la figure 1 principalement par la connexion d'un condensateur de compensation Cc au bloc intégrateur 5, et par un moyen de comparaison, tel qu'un comparateur dynamique 30. Ce comparateur dynamique 30 est utilisé pour contrôler le niveau en tension de la sortie Vm par rapport à une tension de comparaison prédéterminée Vc sur la base d'un seuil de tension déterminé. Ceci permet d'éviter tout blocage de la sortie par saturation, par exemple à un potentiel haut $V_{DD}$ ou à un potentiel bas $V_{SS}$ d'une source de tension d'alimentation suite à une variation brutale sur le circuit électronique à capteur capacitif. Cette variation brutale peut être causée par un choc sur le circuit électronique à capteur capacitif utilisé par exemple pour une mesure d'accélération. Bien entendu comme le bloc d'excitation 3 et l'amplificateur à transfert de charges 4 sont les mêmes que ceux expliqués ci-devant en référence à la figure 1, ils ne seront plus décrits en détail par simplification.

Le capteur capacitif 2 comprend généralement deux condensateurs montés en différentiel. Une électrode commune Cm des condensateurs est susceptible de se déplacer sous l'action notamment d'une force entre deux électrodes fixes pour définir deux condensateurs à capacité variable C1 et C2. Cette électrode commune Cm est maintenue élastiquement dans une position centrale au repos entre les deux électrodes fixes. Ceci permet au circuit électronique de fournir des signaux de mesure d'un paramètre physique, tel qu'une accélération, une vitesse angulaire, une pression ou une force par exemple en fonction du déplacement de l'électrode commune mobile. Ce capteur capacitif 2 (MEMS) peut avantageusement être intégré dans un substrat semi-conducteur, tel qu'un substrat en Silicium. Dans ce cas, il doit être tenu compte de condensateurs parasites Cp1 et Cp2, montrés en traits interrompus sur la figure 3, en parallèle des deux condensateurs C1 et C2.

Le circuit électronique 1 peut être alimenté par une source de tension continue non représentée fournissant à une première borne une tension haute $V_{DD}$ et à une seconde borne une tension basse $V_{SS}$. La tension basse peut être définie à 0 V. L'électrode fixe de chaque condensateur peut être polarisée soit à la tension haute $V_{DD}$, soit à la tension basse $V_{SS}$ dans un mode de fonctionnement du circuit électronique. Ainsi, comme les deux condensateurs ont une valeur capacitive égale dans un mode de repos du capteur 2, la tension sur l'électrode commune Cm est égale au repos à une tension intermédiaire $(V_{DD}-V_{SS})/2$ entre la tension haute $V_{DD}$ et la tension basse Vss.

Le bloc intégrateur 5 comprend des éléments identiques à ceux présentés en référence à la figure 1. Ce bloc intégrateur 5 comprend donc deux interrupteurs d'entrée 18 et 19, un amplificateur opérationnel 11 et un condensateur d'intégration Cf. Ce condensateur Cf est connecté entre l'entrée inverseuse et la sortie de l'amplificateur 11, qui fournit la tension de sortie Vm du bloc intégrateur 5. L'interrupteur d'entrée 18 est disposé entre la borne de sortie du condensateur C4 du bloc à transfert de charges 4 et l'entrée non-inverseuse de l'amplificateur 11. Le potentiel de cette entrée non-inverseuse de l'amplificateur 11 est fixé à la tension de référence Vref. Cette tension de référence Vref peut être fixée à la tension intermédiaire $(V_{DD}-V_{SS})/2$. L'interrupteur d'entrée 19 est disposé entre la borne de sortie du condensateur C4 du bloc à transfert de charges 4 et l'entrée inverseuse de l'amplificateur 11.

Dans le mode de fonctionnement du circuit électronique en référence également à la figure 2, chaque cycle de mesure est divisé en deux phases P1 et P2, chacune de durée identique Ts, par exemple de l'ordre de 6 μs. L'interrupteur 18 est fermé par des signaux SW2 à l'état "1" dans la première phase P1 pour que la tension aux bornes du condensateur C4 du bloc à transfert de charges soit égale à Vm si la tension de référence Vref est de préférence à la tension intermédiaire $(V_{DD}-V_{SS})/2$, qui peut être définie comme une masse DC. L'interrupteur 19 est pour sa part fermé par des signaux SW1 à l'état "1" dans la seconde phase P2 pour opérer un écoulement de charges entre la borne de sortie du condensateur C4 du bloc à transfert de charges 4 et le bloc intégrateur 5. Cet écoulement de charges provenant du bloc amplificateur à transfert de charges 4 est intégré dans le condensateur Cf. Ainsi, la tension de sortie Vm est mise à jour, c'est-à-dire modifiée d'une quantité proportionnelle à la charge accumulée sur l'électrode mobile commune durant la seconde phase.

Un condensateur de compensation Cc est également prévu pour être relié au bloc intégrateur 5 pour pallier aux effets des condensateurs parasites Cp1 et Cp2, montrés en traits interrompus sur la figure 3, en parallèle des condensateurs C1 et C2 dans le capteur 2. Pour de plus amples informations techniques concernant l'emploi d'un tel condensateur de compensation Cc dans ce circuit électronique à capteur capacitif, le lecteur se référera au document de brevet FR 2 720 510, qui est incorporé ici par référence.

Une première électrode du condensateur de compensation Cc est reliée à la borne de sortie du condensateur C4, et à l'entrée des interrupteurs 18 et 19. Une seconde électrode du condensateur de compensation Cc est reliée par l'intermédiaire d'un interrupteur 18' à la borne de la tension de sortie Vm, et par l'intermédiaire d'un interrupteur 19' à la borne de la tension de référence Vref. Dans la première phase P1, la seconde électrode du condensateur de compensation Cc est directement reliée à la borne de tension de sortie Vm en fermant l'interrupteur 18'. Dans la seconde phase P2, la seconde électrode du condensateur de compensation Cc est directement reliée à la borne de tension de référence Vref en fermant l'interrupteur 19'.

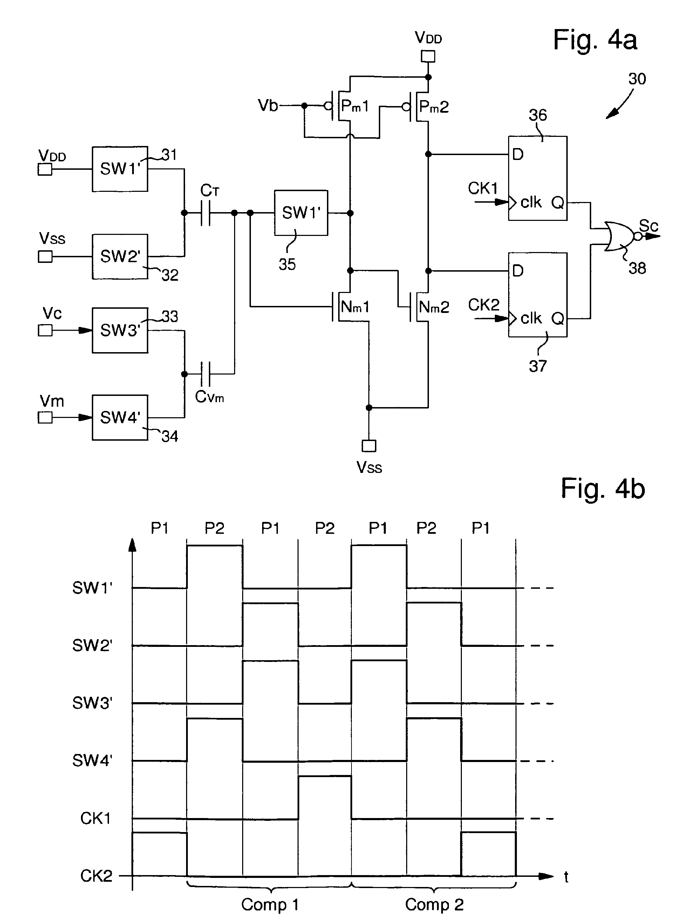

Le circuit électronique 1 comprend encore un moyen de comparaison 30, qui est de préférence un comparateur dynamique expliqué ci-après en référence aux figures 4a et 4b. Dans ce comparateur dynamique 30, la tension de sortie Vm est comparée à une tension de comparaison déterminée Vc. Cette tension de comparaison peut avantageusement être égale à la tension de référence Vref, c'est-à-dire égale à la tension intermédiaire $(V_{DD}-V_{SS})/2$. Si l'écart de tension entre la tension de comparaison Vc et la tension de sortie Vm dépasse un seuil de tension déterminé, un signal de commande d'activation Sc est transmis du comparateur dynamique aux deux interrupteurs 18' et 19' pour les ouvrir afin de déconnecter le condensateur de compensation Cc. De par la logique de commande du circuit électronique 1, le signal de commande Sc prime sur tous les autres signaux de commande pour déconnecter ces deux interrupteurs 18' et 19'. Ce signal de commande Sc prime tant que l'écart entre la tension de sortie Vm et la tension de comparaison Vc est supérieur au seuil de tension. Par rapport à une tension intermédiaire, ce seuil de tension doit être supérieur à la gamme de mesure du circuit électronique, mais inférieur à la tension de saturation de l'intégrateur.

Une forme d'exécution d'un tel comparateur dynamique, ainsi que son mode de fonctionnement pour la comparaison entre la tension de sortie Vm et la tension de comparaison Vc sont expliqués en référence aux figures 4a et 4b.

A la figure 4a, le comparateur dynamique 30 comprend tout d'abord un condensateur seuil $C_T$ et un condensateur de contrôle $C_{Vm}$ pour définir un rapport capacitif. Comme montré sur les formules suivantes, ce rapport capacitif déterminé par multiplication à la valeur du potentiel haut $V_{DD}$ de la source de tension d'alimentation si le potentiel bas $V_{SS}$ est à 0 V, le seuil de tension à ne pas dépasser. Il peut être choisi une valeur capacitive $C_{Vm}$ égale à 4 fois la valeur capacitive $C_T$, ce qui donne un seuil de tension égal à $V_{DD}/4$.

Il doit être comparé aussi bien la tension de sortie Vm soustraite de la tension de comparaison Vc, que la tension de comparaison Vc soustraite de la tension de sortie Vm, si cette tension de sortie se trouve au-dessus ou au-dessous de la tension intermédiaire $(V_{DD}-V_{SS})/2$. Pour que la tension de sortie Vm soit considérée en dehors de la gamme de mesure admissible, le comparateur dynamique doit donc tenir compte des formules de comparaison (1) et (2) suivantes :

$$(Vc-Vm) > (C_T/C_{Vm}) \cdot V_{DD} \quad (1)$$

et

$$(Vm-Vc) > (C_T/C_{Vm}) \cdot V_{DD} \quad (2)$$

Dans la forme d'exécution du comparateur dynamique 30, une première électrode du condensateur seuil $C_T$ est reliée par l'intermédiaire d'un interrupteur 31 à la borne de potentiel haut $V_{DD}$, et par l'intermédiaire d'un interrupteur 32 à la borne de potentiel bas $V_{SS}$ de la source de tension d'alimentation, non représentée. La seconde électrode du condensateur seuil $C_T$ est reliée à la seconde électrode du condensateur de contrôle $C_{Vm}$, dont la première électrode est reliée par l'intermédiaire d'un interrupteur 33 à la tension de comparaison Vc et par l'intermédiaire d'un interrupteur 34 à la tension de sortie Vm.

La seconde électrode de chaque condensateur $C_T$ et $C_{Vm}$ définit un noeud qui est relié à une grille d'un premier transistor NMOS Nm1. Ce noeud de connexion est également relié par l'intermédiaire d'un interrupteur 35 au drain du premier transistor NMOS Nm1, dont la source est reliée à la borne du potentiel bas $V_{SS}$. Si le potentiel au noeud de connexion des condensateurs seuil $C_T$ et de contrôle $C_{Vm}$ est supérieur au seuil de conduction du premier transistor NMOS Nm1, ce transistor peut être rendu conducteur. Le drain du premier transistor NMOS Nm1 est relié au drain d'un premier transistor PMOS Pm1, dont la source est reliée à la borne de potentiel haut $V_{DD}$. La grille de ce premier transistor Pm1 est polarisée par une tension de grille Vb, au moins quand il est souhaité mettre en fonction le comparateur dynamique 30. Cette tension de grille polarise également la grille d'un second transistor PMOS Pm2, dont la source est reliée également à la borne du potentiel haut $V_{DD}$. Le drain de ce second transistor PMOS Pm2 est relié au drain d'un second transistor NMOS Nm2, dont la source est reliée à la borne de potentiel bas $V_{SS}$. La grille de ce second transistor NMOS Nm2 est reliée aux drains des premiers transistors NMOS Nm1 et PMOS Pm1. Ce second transistor NMOS Nm2 devient normalement conducteur, si le premier transistor NMOS Nm1 n'est pas conducteur, sauf si l'interrupteur 35 est fermé.

Les drains des seconds transistors NMOS Nm2 et PMOS Pm2 sont reliés à une entrée d'une première bascule du type D 36 et à une entrée d'une seconde bascule du type D 37. La première bascule 36 est cadencée par un premier signal de cadencement ou d'horloge CK1, alors que la seconde bascule 37 est cadencée par un second signal de cadencement ou d'horloge CK2. La sortie Q de la première bascule 36 et la sortie Q de la seconde bascule 37 sont reliées à une porte logique du type NON-OU 38, dont la sortie fournit le signal de commande Sc. Ce signal de commande Sc est à l'état "0" pour déconnecter le condensateur de compensation du bloc intégrateur uniquement si la sortie Q d'au moins une des deux bascules 36 et 37 est à l'état haut "1 " proche du potentiel haut $V_{DD}$.

Les deux transistors PMOS Pm1 et Pm2, qui sont considérés comme des sources de courant, sont polarisés sur leur grille par une tension de polarisation Vb. Cette tension de polarisation est choisie, telle qu'un courant de valeur déterminée peut les traverser, ainsi que les transistors NMOS Nm1 ou Nm2 s'ils sont conducteurs. Si le potentiel de grille du premier transistor NMOS Nm1 est supérieur à son seuil de conduction, le transistor Nm1 est traversé par le courant de valeur déterminée fourni par le premier transistor PMOS Pm1. Le potentiel de drain de ce premier transistor Nm1 peut être dans ce cas proche du potentiel bas $V_{SS}$, si l'interrupteur 35 est ouvert. Dans ces conditions, le second transistor NMOS Nm2 devient non conducteur, et son potentiel de drain s'approche du potentiel haut $V_{DD}$.

Dans le cas contraire où le potentiel de grille du premier transistor NMOS Nm1 est au-dessous de son seuil de conduction, il devient non conducteur, et son potentiel de drain s'approche du potentiel haut $V_{DD}$, si l'interrupteur 35 est ouvert. Le second transistor NMOS Nm2 devient dans ce cas conducteur en étant traversé par le courant de valeur déterminée fourni par le second transistor PMOS Pm2. Le potentiel de drain de ce second transistor Nm2 peut être dans ce cas proche du potentiel bas $V_{SS}$.

Il peut être défini un courant fourni par le premier transistor PMOS Pm1 de l'ordre de 1 $\mu$A, et un courant fourni par le second transistor PMOS Pm2 de l'ordre de 500 nA. Dans ces conditions, la largeur de canal du second transistor PMOS est deux fois moins grande que la largeur de canal du premier transistor PMOS.

Le procédé de contrôle du niveau de la tension de sortie Vm par le moyen de comparaison, tel que le comparateur dynamique 30, durant des cycles de mesure d'un paramètre physique du circuit électronique, peut être expliqué en référence à la figure 4b. Sur cette figure 4b, il est représenté un diagramme temporel des différents signaux de commande SW1' à SW4' des interrupteurs 31 à 35 de la figure 4a, et de signaux de cadencement CK1 et CK2 du comparateur dynamique en fonction pour le circuit électronique. L'état de chaque signal de commande est représenté dans la succession de cycles de mesure, qui sont divisés chacun en deux phases P1 et P2 comme expliqué ci-devant.

Pour opérer une comparaison du niveau de la tension de sortie Vm, la période de comparaison correspond à trois cycles de mesure, c'est-à-dire à six fois la durée Ts de chaque phase P1, P2. Il doit être contrôlé tout d'abord la tension de sortie Vm soustraite de la tension de comparaison Vc afin de savoir si cette différence (Vc-Vm) est supérieure à la tension de seuil définie ci-dessus. Cette première comparaison Comp 1 va durer trois phases successives en débutant comme montré sur la figure 4b depuis une phase P2, étant donné que cette comparaison débute lors de la mise à jour de la tension de sortie Vm.

Ensuite il doit être contrôlé la tension de comparaison Vc soustraite de la tension de sortie Vm afin de savoir si cette différence (Vm-Vc) est supérieure à la tension de seuil. Cette seconde comparaison Comp 2 va durer également trois phases successives directement à la suite de la première comparaison Comp 1. De nouveau, la tension de sortie Vm est reliée au comparateur dans la phase P2 de la comparaison Comp 2. Au terme des deux comparaisons effectuées, étant donné que la tension de sortie peut se trouver au-dessus ou au-dessous de la tension intermédiaire, un signal de commande Sc est fourni pour déconnecter le condensateur de compensation si l'écart entre la tension de comparaison Vc et la tension de sortie Vm est supérieur au seuil de tension déterminé.

Pour débuter la première comparaison Comp 1 à la phase P2, les signaux de commande SW1' et SW4' sont à l'état "1" pour fermer les interrupteurs 31, 34 et 35 de la figure 4a. La première électrode du condensateur seuil $C_T$ est ainsi reliée au potentiel haut $V_{DD}$, alors que la première électrode du condensateur de contrôle $C_{Vm}$ est reliée à la tension de sortie Vm, qui est dans une phase de mise à jour. Le potentiel au noeud de connexion des deux condensateurs est ainsi défini par le diviseur capacitif constitué par les deux condensateurs $C_T$ et $C_{Vm}$.

Pour que le premier transistor NMOS Nm1 soit conducteur, il faut que sa tension de grille Vg1 soit supérieure à une tension de seuil Vt. Dans cette phase P2 étant donné que l'interrupteur 35 est fermé, la tension de grille Vg1 de ce premier transistor NMOS conducteur est égale à sa tension de drain Vd additionnée à sa tension de seuil Vt. Dans ces conditions, la tension de grille du second transistor Nm2 est également supérieure à sa tension de seuil, ce qui fait que ce second transistor NMOS est également conducteur. La tension en entrée D de la première bascule 36, ainsi que de la seconde bascule 37 est proche du potentiel bas Vss.

La charge q1 au noeud des condensateurs $C_T$ et $C_{Vm}$, qui est relié à la grille et drain du premier transistor NMOS Nm1, est définie par la formule suivante :

$$q1 = (Vg1\text{-}V_{DD})\cdot C_T + (Vg1\text{-}Vm)\cdot C_{Vm}$$

Dans la deuxième phase de la comparaison Comp 1, qui correspond à la phase P1 d'un cycle de mesure, les interrupteurs 32 et 33 sont fermés par les signaux de commande SW2' et SW3', alors que les interrupteurs 31, 34 et 35 sont ouverts. La première électrode du condensateur seuil $C_T$ est ainsi reliée au potentiel bas $V_{SS}$, alors que la première électrode du condensateur de contrôle $C_{Vm}$ est reliée cette fois à la tension de comparaison Vc. Le potentiel au noeud de connexion des deux condensateurs est ainsi défini par le diviseur capacitif constitué par les deux condensateurs $C_T$ et $C_{Vm}$. La grille du premier transistor NMOS Nm1 est polarisée par la tension Vg2 au noeud de connexion des deux condensateurs $C_T$ et $C_{Vm}$.

La charge q2 au noeud des condensateurs $C_T$ et $C_{Vm}$, qui est relié uniquement à la grille du premier transistor NMOS Nm1, est définie par la formule suivante :

$$q2 = (Vg2-V_{SS}) \cdot C_T + (Vg2-Vc) \cdot C_{Vm}$$

Au terme du premier cycle de comparaison Comp 1, le bilan des charges $\Delta q$ avec l'écart entre les deux tensions de grille $\Delta Vg$, est donné par la formule suivante :

$$\Delta q = q2 - q1 = \Delta Vg \cdot (C_T + C_{Vm}) + (V_{DD} - V_{SS}) \cdot C_T + (Vm-Vc) \cdot C_{Vm} = 0$$

Normalement si $\Delta Vg$ est plus grand que 0, le premier transistor NMOS Nm1 est conducteur, alors que le second transistor NMOS Nm2 est non conducteur avec sa tension de grille proche du potentiel bas $V_{SS}$. La sortie de la première bascule 36 va passer à "1", c'est-à-dire au potentiel haut $V_{DD}$, lors de l'impulsion d'horloge donnée par le signal CK1 dans la dernière phase de la première comparaison Comp 1. Par contre, si $\Delta Vg$ est plus petit que 0, le premier transistor NMOS est non conducteur, alors que le second transistor NMOS est conducteur. Dans ce cas, la sortie de la bascule 36 va passer à "0", c'est-à-dire au potentiel bas $V_{SS}$, lors de l'impulsion d'horloge donnée par le signal CK1. Le seuil de tension est donc défini quand l'écart $\Delta Vg$ est égal à 0 V. Dans ce cas, la tension de mesure Vm soustraite de la tension de comparaison Vc est égale à $(C_T/C_{Vm}) \cdot V_{DD}$ si $V_{SS}$ est à 0 V. Comme indiqué ci-dessus, ce seuil de tension peut être défini avec $C_{Vm}$ égale à 4 fois $C_T$, ce qui donne un seuil de tension égal à $V_{DD}/4$.

Pour la seconde comparaison Comp 2, il doit être effectué cette fois la tension de comparaison Vc soustraite de la tension de mesure Vm. Pour débuter cette seconde comparaison Comp 2, les interrupteurs 31, 33 et 35 sont fermés par les signaux de commande SW1' et SW3', alors que les interrupteurs 32 et 34 de la figure 4a, sont ouverts. La première électrode du condensateur seuil $C_T$ est reliée à $V_{DD}$, alors que la première électrode du condensateur de contrôle $C_{Vm}$ est reliée à Vc. Dans la seconde phase de la seconde comparaison Comp 2, les interrupteurs 32 et 34 sont fermés par les signaux de commande alors que les interrupteurs 31, 33 et 35 sont ouverts. La première électrode du condensateur seuil $C_T$ est reliée à $V_{SS}$, alors que la première électrode du condensateur de contrôle $C_{Vm}$ est reliée à Vm.

Au terme de cette seconde comparaison Comp 2, la seconde bascule 37 est cadencée par le second signal d'horloge CK2 afin de transmettre en sortie Q l'état du signal à l'entrée D. Si le second transistor NMOS Nm2 est non conducteur, la sortie Q de la seconde bascule est à l'état "1", alors que si ce second transistor NMOS est conducteur, la sortie Q est à l'état "0". La porte logique 38, qui reçoit les deux signaux de sortie des bascules 36 et 37, fournit le signal de commande Sc. Ce signal de commande est à l'état "0" pour déconnecter le condensateur de compensation du bloc intégrateur uniquement si au moins une des deux sorties Q est à l'état "1". L'écart entre la tension de mesure Vm et la tension de comparaison Vc est ainsi contrôlé au-dessus du seuil de tension.

Plusieurs cycles successifs de comparaison au moyen du comparateur dynamique peuvent être exécutés durant le fonctionnement du circuit électronique pour la mesure d'un paramètre physique. Cependant il peut aussi être envisagé de mettre en fonction le comparateur dynamique par périodes de fonctionnement préprogrammées de manière à ne pas laisser ce comparateur dynamique continuellement en fonction pendant les cycles de mesure d'un paramètre physique.

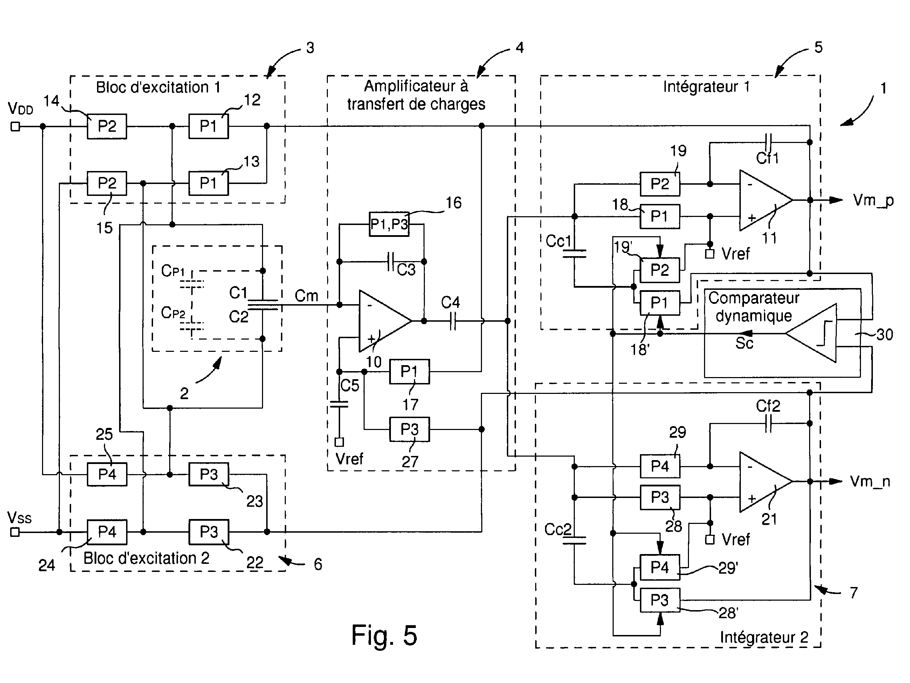

Comme pour les formes d'exécution représentées aux figures 1 et 3, le circuit électronique 1 de la figure 5, comprend des éléments identiques, qui portent des mêmes signes de référence et qui ne seront par simplification plus tous expliqués en détail. Ce circuit électronique 1 comprend donc un bloc amplificateur à transfert de charges 4, qui est relié en entrée à l'électrode commune Cm, un premier bloc intégrateur 5 et un second bloc intégrateur 7 de structure identique reliés en sortie du bloc amplificateur 4, un premier bloc d'excitation 3 disposé entre la sortie du premier bloc intégrateur 5 et le capteur 2, et un second bloc d'excitation 6 disposé entre la sortie du second bloc intégrateur 7 et le capteur 2. Un premier condensateur de compensation Cc1 est connecté au premier bloc intégrateur 5, alors qu'un second condensateur de compensation Cc2 est connecté au second bloc intégrateur 7.

Dans le bloc amplificateur à transfert de charges 4, l'interrupteur 17 est disposé entre la sortie du premier bloc intégrateur 5 et l'entrée non-inverseuse de l'amplificateur 10, et l'interrupteur 27 est disposé entre la sortie du second bloc intégrateur 7 et l'entrée non-inverseuse de l'amplificateur 10. Quand l'interrupteur 17 est fermé, le condensateur C5 est polarisé par la tension de sortie Vm_p, alors que quand l'interrupteur 27 est fermé, le condensateur C5 est polarisé par la tension de sortie Vm_n. Cependant le fonctionnement de ce bloc amplificateur à transfert de charges 4 est similaire à celui expliqué en référence aux figures 1 et 3.

Le premier bloc intégrateur 5 fournit en permanence une tension de sortie Vm_p égale à l'intégrale des charges fournies par le bloc amplificateur 4, alors que le second bloc intégrateur 7 fournit en permanence en sortie une tension Vm_n inverse de la tension Vm_p par rapport à une tension intermédiaire de repos $(V_{DD}-V_{SS})/2$. Chaque bloc d'excitation 3 et 6 polarise alternativement et cycliquement les électrodes fixes à des niveaux de tension spécifiés comme décrit ci-après. Pour de plus amples informations techniques sur cette interface à double structure du circuit électronique 1 à capteur capacitif, le lecteur peut se référer au document de brevet EP 1 835 263, qui est incorporé ici par référence.

Le premier bloc d'excitation 3 comprend quatre interrupteurs 12, 13, 14 et 15, qui peuvent être formés par des transistors MOS de commutation dans le circuit intégré. Les interrupteurs 12 à 15 du circuit électronique 1 sont branchés de la même manière que ceux du circuit électronique montré aux figures 1 et 3.

Le second bloc d'excitation 6 est d'une structure similaire au premier bloc d'excitation 3. Ce second bloc d'excitation 6 comprend également quatre interrupteurs 22, 23, 24 et 25 formés par des transistors MOS dans le circuit intégré. Le premier interrupteur 22 est disposé entre la sortie du second bloc intégrateur 7 et l'électrode fixe du condensateur C1. Le second interrupteur 23 est disposé entre la sortie du second bloc intégrateur 7 et l'électrode fixe du condensateur C2. Le troisième interrupteur 24 est disposé entre la borne de tension basse $V_{SS}$ et l'électrode fixe du condensateur C1. Finalement, le quatrième interrupteur 25 est disposé entre la borne de tension haute $V_{DD}$ et l'électrode fixe du condensateur C2.

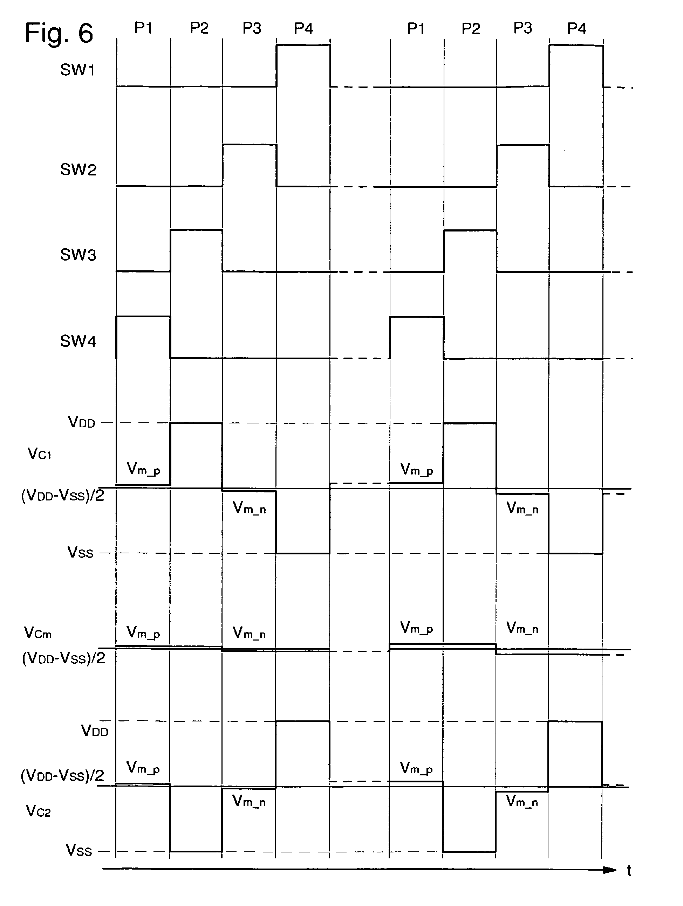

Lors de la mise en fonction du circuit électronique 1, chaque cycle ou période successif de fonctionnement est divisé en quatre phases P1 à P4 comme montré à la figure 6, chacune de durée identique Ts, qui peut être de l'ordre de 6 μs. Le passage d'une phase à l'autre est commandé par des signaux d'horloge non représentés de manière à respectivement ouvrir ou fermer notamment les interrupteurs des premier et second blocs d'excitation 3 et 6. Dans les deux premières phases P1 et P2, le premier bloc intégrateur 5, ainsi que le premier bloc d'excitation 3 sont en fonction, alors que dans les troisième et quatrième phases P3 et P4, le second bloc intégrateur 7, ainsi que le second bloc d'excitation 6 sont en fonction. De ce fait, à chaque demi-période, les premiers bloc intégrateur 5 et bloc d'excitation 3, et les seconds bloc intégrateur 7 et bloc d'excitation 6 sont alternativement enclenchés symétriquement.

Il est à noter que dans la succession de phases pour la mesure du paramètre physique, chaque interrupteur du circuit électronique 1 est fermé dans la phase correspondante à celle indiquée dans chaque interrupteur sur la figure 5.

Comme pour la première forme d'exécution de la figure 3, le premier bloc intégrateur 5 comprend les deux interrupteurs d'entrée 18 et 19 connectés de la même manière, un amplificateur opérationnel 11 et un condensateur d'intégration Cf1. Ce condensateur Cf1 est connecté entre l'entrée inverseuse et la sortie de l'amplificateur 11, qui fournit la tension de sortie Vm_p du premier bloc intégrateur 5. Le potentiel de l'entrée non-inverseuse de l'amplificateur 11 est fixé à la tension de référence Vref, qui peut être définie comme la tension intermédiaire $(V_{DD}-V_{SS})/2$.

Le second bloc intégrateur 7 comprend également deux interrupteurs d'entrée 28 et 29, un amplificateur opérationnel 21 et un condensateur d'intégration Cf2. Ce condensateur Cf2 est connecté entre l'entrée inverseuse et la sortie de l'amplificateur 21, qui fournit la tension de sortie Vm_n du second bloc intégrateur 7. L'interrupteur d'entrée 28 est disposé entre la borne de sortie du condensateur C4 du bloc à transfert de charges 4 et l'entrée non-inverseuse de l'amplificateur 21. Le potentiel de l'entrée non-inverseuse de l'amplificateur 21 est fixé à la tension de référence Vref. L'interrupteur 29 est disposé entre la borne de sortie du condensateur C4 du bloc à transfert de charges 4 et l'entrée inverseuse de l'amplificateur 21.

Une première électrode du premier condensateur de compensation Cc1 est reliée à la borne de sortie du condensateur C4, et à l'entrée des interrupteurs 18 et 19 du premier bloc intégrateur 5. Une seconde électrode du condensateur de compensation Cc1 est reliée directement en fermant un interrupteur 18' à la borne de la tension de sortie Vm_p du premier bloc intégrateur 5 dans la première phase P1. Cette seconde électrode du condensateur de compensation Cc1 est reliée directement à la borne de la tension de référence Vref en fermant un interrupteur 19' dans la seconde phase P2.

Une première électrode du second condensateur de compensation Cc2 est reliée à la borne de sortie du condensateur C4, et à l'entrée des interrupteurs 28 et 29 du second bloc intégrateur 7. Une seconde électrode du condensateur de compensation Cc2 est reliée directement en fermant un interrupteur 28' à la borne de la tension de sortie Vm_n du second bloc intégrateur 7 dans la troisième phase P3. Cette seconde électrode du condensateur de compensation Cc2 est reliée directement à la borne de la tension de référence Vref en fermant un interrupteur 29' dans la quatrième phase P4.

Dans le mode de fonctionnement du circuit électronique, les interrupteurs 18, 18', 19, 19', 28, 28', 29 et 29' sont fermés par des signaux SW1 à SW4 à l'état "1" dans chaque phase correspondante comme indiqué précédemment. L'indication de la phase dans laquelle chacun de ces interrupteurs est fermé, est ainsi mentionnée dans chaque interrupteur sur la figure 5 par simplification.

Il est à noter que certains signaux de commande des interrupteurs peuvent être d'une durée à l'état "1" légèrement supérieure aux autres signaux de commande. Ceci permet de fermer ou ouvrir certains interrupteurs avant d'autres interrupteurs dans chaque phase P1 à P4.

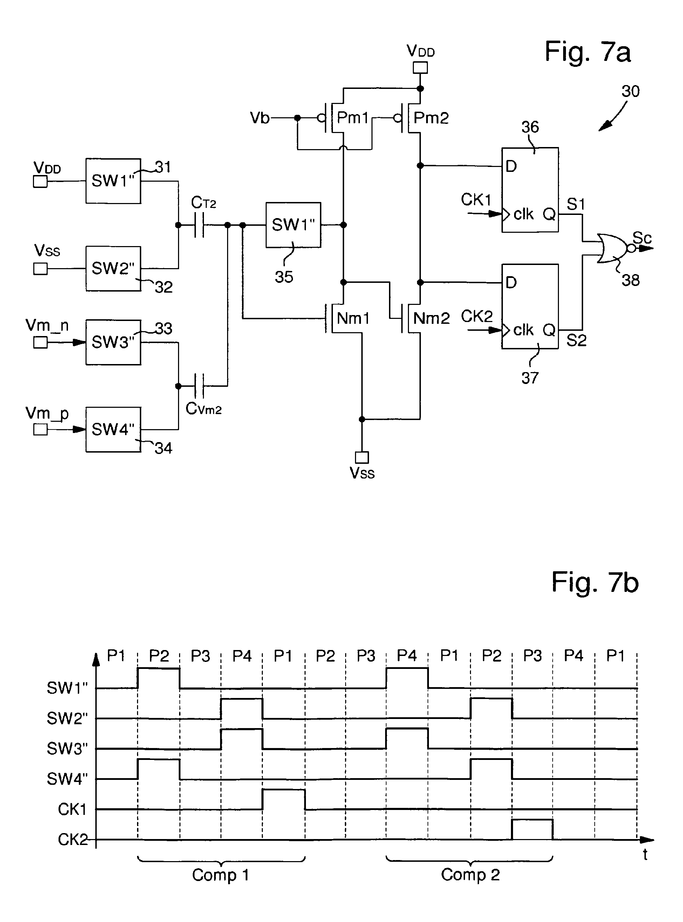

Le circuit électronique 1 comprend encore un moyen de comparaison 30, qui est de préférence un comparateur dynamique expliqué ci-après en référence aux figures 7a et 7b. Dans ce comparateur dynamique 30, la tension de sortie Vm_p est comparée cette fois-ci à la tension de sortie Vm_n, qui fait office de tension de comparaison. Si l'écart de tension entre la tension de sortie Vm_p et la tension de sortie Vm_n dépasse un seuil de tension déterminé, un signal de commande d'activation Sc est transmis du comparateur dynamique 30 aux quatre interrupteurs 18', 19', 28' et 29' pour les ouvrir afin de déconnecter les condensateurs de compensation Cc1 et Cc2.

Il est à noter que dans cette seconde forme d'exécution, le seuil de tension peut être défini comme le double du seuil de tension de la première forme d'exécution de la figure 3. De par la logique de commande du circuit électronique 1, le signal de commande Sc prime sur tous les autres signaux de commande pour pouvoir ouvrir ces quatre interrupteurs 18', 19', 28' et 29' et ainsi déconnecter les condensateurs de compensation Cc1 et Cc2. Ce signal de commande Sc prime tant que l'écart entre les deux tensions de sortie Vm_p et Vm_n est supérieur au seuil de tension. Ce seuil de tension doit être supérieur à la gamme de mesure du circuit électronique, mais inférieur à la tension de saturation de chaque bloc intégrateur.

Grâce au comparateur dynamique 30, cela permet d'empêcher rapidement tout blocage ou verrouillage des sorties à une tension haute ou à une tension basse suite à une variation brutale, telle qu'un choc appliqué au capteur lors d'une mesure d'une force. La déconnexion momentanée des condensateurs de compensation évite de devoir opérer une réinitialisation complète du circuit électronique 1.

En référence à la figure 6 et lors d'un fonctionnement normal du circuit électronique sans variation brutale, telle qu'un choc sur le capteur, tout d'abord, les interrupteurs 12 et 13 sont fermés par des signaux SW4 à l'état "1" dans la première phase notée P1, alors que les interrupteurs 14, 15, 22 à 25 sont ouverts dans cette première phase P1. Dans cette première phase P1, la tension Vm_p présente en sortie du premier bloc intégrateur 5 est appliquée à chaque électrode du capteur 2. Ceci permet de décharger complètement les deux condensateurs comme montrés par les diagrammes des tensions $V_{C1}$, $V_{Cm}$ et $V_{C2}$.

Les interrupteurs 14 et 15 sont ensuite fermés par des signaux SW3 à l'état "1" dans la seconde phase notée P2, alors que les interrupteurs 12, 13, 22 à 25 sont ouverts. Dans cette seconde phase P2, la tension $V_{SS}$ est appliquée à l'électrode fixe C2 vue au diagramme de $V_{C2}$, alors que la tension $V_{DD}$ est appliquée à l'électrode fixe C1 vue au diagramme de $V_{C1}$. La tension de sortie Vm_p est mise à jour dans cette seconde phase P2. Si l'électrode mobile s'est déplacée d'une certaine distance en direction de l'une ou l'autre des électrodes fixes, les capacités des condensateurs vont varier inversement.

Comme montré à la figure 6, l'électrode mobile Cm s'est déplacée vers l'électrode fixe du condensateur C1. Ceci rend la capacité C1 plus grande que la capacité C2. Ceci conduira à une différence de charges accumulées par chaque condensateur, qui dépend également de la tension Vm_p appliquée précédemment à chaque électrode des condensateurs. La tension de sortie Vm_p du premier bloc intégrateur 5 tend vers une tension finale Vm_p qui est dans ce cas au-dessus de la tension intermédiaire $(V_{DD}-V_{SS})/2$ après plusieurs cycles de mesure.

Dans la troisième phase notée P3, les interrupteurs 22 et 23 du second bloc d'excitation 6 sont fermés par des signaux SW2 à l'état "1" alors que les interrupteurs 24, 25, 12 à 15 sont ouverts dans cette troisième phase P3. Dans cette troisième phase P3, la tension Vm_n présente en sortie du second bloc intégrateur 7 est appliquée à chaque électrode du capteur 2. Ceci permet de décharger complètement les deux condensateurs à la tension Vm_n comme montré par les diagrammes des tensions $V_{C1}$, $V_{Cm}$ et $V_{C2}$.

Les interrupteurs 24 et 25 sont ensuite fermés par des signaux SW1 à l'état "1 dans la quatrième phase notée P4, alors que les interrupteurs 22, 23, 12 à 15 sont ouverts. Dans cette quatrième phase P4, la tension $V_{DD}$ est appliquée à l'électrode fixe C2 vue au diagramme de $V_{C2}$, alors que la tension $V_{SS}$ est appliquée à l'électrode fixe C1 vue au diagramme de $V_{C1}$. La tension de sortie Vm_n est mise à jour dans cette quatrième phase P4. Comme on peut le remarquer sur ces diagrammes en polarisant alternativement dans chaque cycle de mesure, chaque électrode fixe C1 ou C2 une fois à $V_{DD}$ et une fois à $V_{SS}$, le fonctionnement du circuit électronique 1 est ainsi totalement symétrique.

La valeur finale de la tension Vm_p en sortie du premier bloc intégrateur 5, ainsi que la valeur finale de la tension Vm_n en sortie du second bloc intégrateur 7 sont obtenues après plusieurs cycles de fonctionnement du circuit électronique. Initialement, les tensions Vm_p et Vm_n sont égales à la tension intermédiaire $(V_{DD}-V_{SS})/2$. Ces valeurs de tension sont fonction du déplacement de l'électrode mobile entre les deux électrodes fixes comme montré sur le diagramme de la tension $V_{Cm}$. Dans ce cas de figure, l'électrode commune s'est déplacée en direction de l'électrode fixe du condensateur C1. Ceci conduit à obtenir une tension finale de sortie Vm_p du premier bloc intégrateur 5 au-dessus de la tension milieu $(V_{DD}-V_{SS})/2$, et une tension finale de sortie Vm_n du second bloc intégrateur 7 au-dessous de $(V_{DD}-V_{SS})/2$.

Après plusieurs cycles de mesure, par exemple 50 cycles, et sans variation brutale, telle qu'un choc sur le capteur, l'écart de tension finale entre Vm_p et $(V_{DD}-V_{SS})/2$ et l'écart de tension finale entre Vm_n et $(V_{DD}-Vss)/2$ sont égaux et en dessous d'un seuil de tension déterminé. Ceci permet de traiter deux signaux de mesure dans un circuit de traitement non représenté de manière à compenser les non-linéarités mentionnées ci-dessus dues au potentiel de substrat et aux capacités parasites.

A l'équilibre, la différence de tension Vme entre la tension de sortie Vm_p finale et la tension de sortie Vm_n finale, qui est traitée par un circuit de traitement relié à l'interface du circuit électronique 1, peut être exprimée par la formule suivante :

$$Vme = Vm\_p\text{-}Vm\_n = ((C1\text{-}C2)/(C1+C2+2{\cdot}Cp\text{-}(C3/C4){\cdot}Cc)){\cdot}V_{DD}$$

où

$$Cp = Cp1 = Cp2,\ et\ Cc = Cc1 = Cc2 = 2{\cdot}(C4{\cdot}Cp/C3).$$

Pour donner un ordre de grandeur non limitatif de différentes valeurs capacitives, la capacité de chaque condensateur C1 ou C2 est de l'ordre de 450 fF au repos. La capacité du condensateur C3 peut être de l'ordre de 600 fF. La capacité du condensateur C4 peut être de l'ordre de 1 pF. La capacité du condensateur C5 peut être de l'ordre de 1.8 pF. La capacité de chaque condensateur de compensation Cc peut être de l'ordre de 333 fF. La capacité de chaque condensateur parasite Cp peut être de l'ordre de 100 fF. La capacité des condensateurs Cf1 et Cf2 peut être de l'ordre de 5 pF. La capacité du condensateur seuil $C_{T2}$ du comparateur dynamique de la figure 7a peut être de l'ordre de 125 fF, et celle du condensateur de contrôle $C_{Vm2}$ peut être de l'ordre de 250 fF, ce qui donne un seuil de tension égal à $V_{DD}$/2. Chaque phase de chaque cycle est approximativement d'une durée Ts de l'ordre de 6 $\mu$s, ce qui donne une tension finale de mesure après environ 1 ms. De plus, le capteur peut être configuré pour que le circuit électronique 1 fournisse un écart de tension entre la tension de sortie Vm_p et la tension intermédiaire $(V_{DD}\text{-}V_{SS})$/2 de 20 mV pour 1 g d'accélération par exemple dans une gamme de mesure définie jusqu'à 8 g.

Une forme d'exécution du comparateur dynamique, ainsi que son mode de fonctionnement pour la comparaison entre les tensions de sortie Vm_p et Vm_n sont expliqués en référence aux figures 7a et 7b.

A la figure 7a, le comparateur dynamique 30 comprend des mêmes éléments avec des signes de référence identiques, que ceux décrits en référence à la figure 4a. De ce fait, par simplification, il ne sera pas répété la description détaillée de la plupart de ces éléments du comparateur dynamique. La seule différence est que la tension de comparaison est remplacée par la tension de sortie Vm_n, qui est comparée à la tension de sortie Vm_p.

Dans ce comparateur dynamique 30, il est également prévu un condensateur seuil $C_{T2}$ et un condensateur de contrôle $C_{Vm2}$ pour définir un rapport capacitif. Comme montré sur les formules suivantes, ce rapport capacitif détermine par multiplication à la valeur du potentiel haut $V_{DD}$ de la source de tension d'alimentation, le seuil de tension à ne pas dépasser. Ce seuil de tension peut être défini en fonction des valeurs capacitives des condensateurs $C_{T2}$ et $C_{Vm2}$ comme étant le double du seuil de tension de la forme d'exécution du comparateur dynamique de la figure 4a. Il doit être comparé aussi bien la tension de sortie Vm_p soustraite de la tension de sortie Vm_n, que la tension de sortie Vm_n soustraite de la tension de sortie Vm_p, suivant que la tension Vm_p est au-dessus ou au-dessous de la tension Vm_n. Pour que les tensions de sortie Vm_p et Vm_n soient considérées en dehors de la gamme de mesure admissible, le comparateur dynamique doit donc tenir compte des formules de comparaison (1) et (2) suivantes :

$$(Vm\_n\text{-}Vm\_p) > (C_{T2}/C_{Vm2}){\cdot}V_{DD}\ (1)$$

et

$$(Vm\_p\text{-}Vm\_n) > (C_{T2}/C_{Vm2}){\cdot}V_{DD}\ (2)$$

Dans la forme d'exécution du comparateur dynamique 30, une première électrode du condensateur seuil $C_{T2}$ est reliée par l'intermédiaire d'un interrupteur 31 à la borne de potentiel haut $V_{DD}$, et par l'intermédiaire d'un interrupteur 32 à la borne de potentiel bas $V_{SS}$ de la source de tension d'alimentation, non représentée. La seconde électrode du condensateur seuil $C_{T2}$ est reliée à la seconde électrode du condensateur de contrôle $C_{Vm2}$, dont la première électrode est reliée par l'intermédiaire d'un interrupteur 33 à la tension de sortie Vm_n et par l'intermédiaire d'un interrupteur 34 à la tension de sortie Vm_p.

Comme pour la forme d'exécution de la figure 4a, la seconde électrode de chaque condensateur $C_{T2}$ et $C_{Vm2}$ définit un noeud qui est relié à une grille d'un premier transistor NMOS Nm1, et par l'intermédiaire d'un interrupteur 35, au drain du transistor Nm1. Le comparateur dynamique 30 comprend encore un premier transistor PMOS Pm1, un second transistor PMOS Pm2, un second transistor NMOS Nm2, deux bascules du type D 36 et 37, qui sont cadencées chacune par un signal d'horloge respectif CK1 et CK2, et une porte logique du type NON-OU 38 fournissant le signal de commande Sc. Tous ces mêmes éléments sont reliés de manière identique à ceux de la figure 4a, qui portent les mêmes signes de référence, et ne sont donc pas décrits ici de manière plus détaillée par simplification.

Le procédé de contrôle du niveau des tensions de sortie Vm_p et Vm_n par le moyen de comparaison, tel que le comparateur dynamique 30, durant des cycles de mesure d'un paramètre physique du circuit électronique, peut être expliqué en référence à la figure 7b. Sur cette figure 7b, il est représenté un diagramme temporel des différents signaux de commande SW1" à SW4" des interrupteurs 31 à 35 de la figure 7a, et de signaux de cadencement CK1 et CK2 du comparateur dynamique en fonction pour le circuit électronique. L'état de chaque signal de commande est représenté dans la succession de cycles de mesure, qui sont divisés chacun en quatre phases P1 à P4 de durée identique Ts comme expliqué ci-devant. La connexion de chaque tension de sortie au comparateur est effectuée lors de leur mise à jour, c'est-à-dire à la seconde phase P2 pour la tension de sortie Vm_p et à la quatrième phase P4 pour la tension de sortie Vm_n.

La durée de la période de comparaison vaut trois cycles de mesure en débutant à la seconde phase P2 notamment pour la connexion de la tension de sortie Vm_p au comparateur dynamique 30. Il est donc contrôlé tout d'abord la tension de sortie Vm_p soustraite de la tension de sortie Vm_n afin de savoir si cette différence (Vm_n-Vm_p) est supérieure à la tension de seuil définie ci-dessus. Cette première comparaison Comp 1 va durer six phases successives en débutant comme montré sur la figure 7b depuis la seconde phase P2 et se terminant par deux phases sans action avant le début de la seconde comparaison Comp 2.

Ensuite il doit être contrôlé la tension de sortie Vm_n soustraite de la tension de sortie Vm_p afin de savoir si cette différence (Vm_p-Vm_n) est supérieure à la tension de seuil. Cette seconde comparaison Comp 2 va durer également six phases successives après la première comparaison Comp 1, et se terminer également par deux phases sans action avant une nouvelle comparaison débutant par la première comparaison Comp 1. Au terme des deux comparaisons effectuées, un signal de commande Sc est fourni pour déconnecter les condensateurs de compensation des premier et second blocs intégrateurs, si l'écart entre les tensions de sortie Vm_p et Vm_n est supérieur au seuil de tension déterminé.

De manière à ne pas répéter chaque phase de comparaison identique comme précédemment expliqué en référence aux figures 4a et 4b, il est juste indiqué la connexion des différents interrupteurs par les signaux de commande SW1 " à SW4" et les signaux de cadencement CK1 et CK2 des deux bascules pour les deux comparaisons Comp 1 et Comp 2 montrés à la figure 7b. Au début de la première comparaison à la phase P2, les interrupteurs 31, 34 et 35 sont fermés par les signaux de commande SW1 " et SW4" à l'état "1", alors que les autres interrupteurs 32 et 33 sont ouverts. La première électrode du condensateur $C_{T2}$ est reliée à $V_{DD}$ et la première électrode du condensateur $C_{Vm2}$ est reliée à la première tension de sortie Vm_p. A la phase P3, tous les interrupteurs sont ouverts. A la phase P4, les interrupteurs 32 et 33 sont fermés par les signaux de commande SW2" et SW3" à l'état "1 ". La première électrode du condensateur $C_{T2}$ est reliée à $V_{SS}$ et la première électrode du condensateur $C_{Vm2}$ est reliée à la seconde tension de sortie Vm_n, en tant que tension de comparaison. La première bascule 36 est cadencée par le signal d'horloge CK1 qui passe à l'état "1" à la phase P1 pour transmettre en sortie Q l'état de l'entrée D. Aux phases suivantes P2 et P3, tous les interrupteurs sont ouverts avant le début de la seconde comparaison Comp 2.

La seconde comparaison Comp 2 débute à la phase P4 de mise à jour de la seconde tension de sortie Vm_n. Dans cette phase P4, les interrupteurs 31, 33 et 35 sont fermés par les signaux de commande SW1 " et SW3" à l'état "1", alors que les interrupteurs 32 et 34 sont ouverts. Dans la phase P1 suivante, tous les interrupteurs sont ouverts. Dans la phase P2 suivante, les interrupteurs 32 et 34 sont fermés par les signaux de commande SW2" et SW4" à l'état "1", alors que les interrupteurs 31, 33 et 35 sont ouverts. La seconde bascule 37 est cadencée par le signal d'horloge CK2 qui passe à l'état "1" à la phase P3 pour transmettre en sortie Q l'état de l'entrée D de cette seconde bascule. Aux phases suivantes P4 et P1, tous les interrupteurs sont ouverts avant le début d'une nouvelle comparaison. La sortie de la porte logique 38 fournit un signal de commande Sc, qui est à l'état "0" si l'écart entre les tensions de sortie Vm_p et Vm_n est au-dessus du seuil de tension.

Bien entendu les signaux d'horloge CK1 et CK2 peuvent intervenir soit à la phase P2 ou P3 pour la première comparaison Comp1 avec le premier signal d'horloge CK1, soit à la phase P4 ou P1 pour la seconde comparaison Comp 2 avec le second signal d'horloge CK2.

A partir de la description qui vient d'être faite, de multiples variantes de réalisation du circuit électronique à capteur capacitif peuvent être conçues par l'homme du métier sans sortir du cadre de l'invention définie par les revendications. Il peut être envisagé de mettre en fonction le moyen de comparaison après plusieurs cycles de mesure suivant la mise en fonction du circuit électronique pour la mesure d'un paramètre physique. Ce moyen de comparaison peut être cycliquement mis en fonction pour un contrôle de l'état de la ou des tensions de sortie du circuit électronique.

**Revendications**

1. Circuit électronique (1) à capteur capacitif (2) pour la mesure d'un paramètre physique, tel qu'une accélération, une vitesse angulaire, une force ou une pression, le capteur comprenant au moins deux condensateurs (C1, C2) montés en différentiel, dont une électrode commune (Cm) est susceptible de se déplacer par rapport à chaque électrode fixe des deux condensateurs pour modifier la valeur capacitive de chaque condensateur lors de la mesure du paramètre physique, ledit circuit électronique ayant une interface reliée au capteur capacitif, qui comprend :

   - un bloc amplificateur à transfert de charges (4) connecté à l'électrode commune (Cm),
   - un bloc intégrateur (5) pour intégrer les charges fournies par le bloc amplificateur à transfert de charges et pour fournir une tension de sortie (Vm), ledit bloc intégrateur (5) étant muni en entrée d'un condensateur de compensation (Cc; Cc1), et
   - un bloc d'excitation (3) disposé entre la sortie du bloc intégrateur (5) et le capteur pour polariser chaque électrode fixe des condensateurs du capteur à une valeur de tension déterminée,

   **caractérisé en ce que** l'interface du circuit électronique comprend également un moyen de comparaison (30) pour comparer la tension de sortie (Vm) avec une tension de comparaison (Vc) afin de commander la déconnexion du condensateur de compensation en entrée du bloc intégrateur (5), si l'écart entre la tension de sortie (Vm) et la tension de comparaison se trouve au-dessus d'un seuil de tension déterminé.

2. Circuit électronique (1) selon la revendication 1, **caractérisé en ce que** le moyen de comparaison est un comparateur dynamique (30).

3. Circuit électronique (1) selon l'une des revendications précédentes, **caractérisé en ce que** l'interface du circuit électronique comprend également :

   - un second bloc intégrateur (7) de structure équivalente au premier bloc intégrateur (5), pour intégrer les charges fournies par l'amplificateur à transfert de charges, ledit second bloc intégrateur étant muni en entrée d'un second condensateur de compensation (Cc2) susceptible d'être déconnecté comme le premier condensateur de compensation (Cc1) par le moyen de comparaison (30) si l'écart entre la tension de sortie (Vm_p) du premier bloc intégrateur et la tension de sortie (Vm_n) du second bloc intégrateur, qui définit la tension de comparaison, est au-dessus d'un seuil de tension déterminé, les premier et second blocs intégrateurs étant arrangés pour fonctionner alternativement et cycliquement par cycle de mesure, et
   - un second bloc d'excitation (6) disposé entre la sortie du second bloc intégrateur et le capteur (2) pour polariser chaque électrode fixe des condensateurs (C1, C2) du capteur à une valeur de tension déterminée inverse de la valeur de tension commandée par le premier bloc d'excitation, les premier et second blocs d'excitation étant arrangés pour fonctionner alternativement et cycliquement par cycle de mesure chacun avec leur bloc intégrateur respectif afin que le circuit électronique fonctionne de manière entièrement symétrique pour la mesure du paramètre physique.

4. Circuit électronique (1) selon la revendication 3, **caractérisé en ce que** chaque bloc intégrateur (5, 7) comprend un amplificateur opérationnel (11, 21), un condensateur d'intégration (Cf1, Cf2) connecté entre une entrée inverseuse de l'amplificateur et la sortie de l'amplificateur, un premier interrupteur (19, 29) connecté entre la sortie du bloc amplificateur à transfert de charges et l'entrée inverseuse de l'amplificateur, et un second interrupteur (18, 28) connecté entre la sortie du bloc amplificateur à transfert de charges et l'entrée non-inverseuse de l'amplificateur, qui est polarisée à une tension de référence (Vref), chaque interrupteur de chaque bloc intégrateur étant commandé pour être alternativement fermé dans chaque cycle normal de mesure du circuit électronique, **en ce que** les premier et second condensateurs de compensation (Cc1, Cc2) sont reliés par une première électrode en entrée des premier et second interrupteurs (18, 19; 28, 29) de chaque bloc intégrateur (5, 7), et **en ce qu'**une seconde électrode de chaque condensateur de compensation (Cc1, Cc2) est reliée chacune à la sortie (Vm_p, Vm_n) du bloc intégrateur respectif par l'intermédiaire d'un troisième interrupteur (18', 28'), et à la tension de référence (Vref) par l'intermédiaire d'un quatrième interrupteur (19', 29'), les troisième et quatrième interrupteurs de chaque bloc intégrateur étant commandés par le moyen de commande (30) afin de les ouvrir, et ainsi déconnecter les condensateurs de compensation, si l'écart de tension entre la tension de sortie du premier bloc intégrateur et la tension de sortie du second bloc intégrateur est au-dessus du seuil de tension déterminé.

5. Circuit électronique (1) selon l'une des revendications précédentes, **caractérisé en ce que** le moyen de comparaison, qui est un comparateur dynamique (30), comprend en entrée un condensateur seuil ($C_T$, $C_{T2}$) relié à un condensateur de contrôle ($C_{Vm}$, $C_{Vm2}$), pour définir un rapport capacitif qui détermine par multiplication à une valeur de tension correspondant au potentiel bas ($V_{SS}$) soustrait du potentiel haut ($V_{DD}$) de la source de tension d'alimentation, le seuil de tension déterminé.

6. Circuit électronique (1) selon la revendication 5, **caractérisé en ce qu'**une première électrode du condensateur seuil ($C_T$) est reliée en entrée par l'intermédiaire d'un premier interrupteur (31) du comparateur au potentiel haut ($V_{DD}$) et par l'intermédiaire d'un second interrupteur (32) au potentiel bas ($V_{SS}$) de la source de tension d'alimentation, et **en ce qu'**une seconde électrode du condensateur seuil ($C_T$) est reliée pour définir un noeud de connexion, à une seconde électrode du condensateur de contrôle ($C_{Vm}$), dont la première électrode est reliée par l'intermédiaire d'un troisième interrupteur (33) à la tension de comparaison (Vc) et par l'intermédiaire d'un quatrième interrupteur (34) à la tension de sortie (Vm; Vm_p) du premier bloc intégrateur, les interrupteurs étant commandés dans le comparateur dynamique pour permettre au comparateur d'effectuer la tension de sortie soustraite de la tension de comparaison, ainsi que la tension de comparaison soustraite de la tension de sortie.

7. Circuit électronique (1) selon la revendication 6, **caractérisé en ce que** le noeud de connexion des condensateurs seuil et de contrôle ($C_T$, $C_{Vm}$) est relié à une grille d'un premier transistor NMOS (Nm1) et à son drain par un cinquième interrupteur (35), la source de ce premier transistor NMOS étant reliée à la borne du potentiel bas ($V_{SS}$), **en ce que** le drain du premier transistor NMOS est relié au drain d'un premier transistor PMOS (Pm1), dont la source est reliée à la borne de potentiel haut ($V_{DD}$), la grille de ce premier transistor PMOS étant polarisée par une tension de polarisation (Vb), qui polarise encore la grille d'un second transistor PMOS (Pm2), dont la source est reliée à la borne de potentiel haut ($V_{DD}$), le drain de ce second transistor PMOS étant relié au drain d'un second transistor NMOS (Nm2), dont la source est reliée à la borne de potentiel bas ($V_{SS}$), et la grille de ce second transistor NMOS est reliée aux drains des premiers transistors NMOS et PMOS, et **en ce que** les drains des seconds transistors NMOS et PMOS sont reliés à une entrée d'une première bascule du type D (36) cadencée par un premier signal de cadencement (CK1) et à une entrée d'une seconde bascule du type D (37) cadencée par un second signal de cadencement (CK2), la sortie de chaque bascule étant reliée à une porte logique (38) du type NON-OU, dont la sortie fournit le signal de commande (Sc) du comparateur.

8. Procédé de mise en action du circuit électronique (1) selon l'une des revendications précédentes, pour le contrôle du niveau d'une tension de sortie (Vm, Vm_p) d'au moins un bloc intégrateur (5), pour la mesure d'un paramètre physique, le procédé comprenant au moins deux phases (P1, P2) pour chaque cycle successif de mesure consistant :

- dans une première phase (P1) à polariser chaque électrode fixe des condensateurs (C1, C2) du capteur à la tension de sortie (Vm_p) du bloc intégrateur (5) par l'intermédiaire du bloc d'excitation (3), et
- dans une seconde phase (P2) à polariser par l'intermédiaire du bloc d'excitation (3), l'électrode fixe du premier condensateur (C1) à une tension haute ($V_{DD}$) ou à une tension basse ($V_{SS}$) d'une source de tension d'alimentation du circuit électronique, et à polariser l'électrode fixe du second condensateur (C2) inversement de l'électrode fixe du premier condensateur à une tension basse ($V_{SS}$) ou à une tension haute ($V_{DD}$) de la source de tension,

**caractérisé en ce que** durant des cycles de mesure successifs du paramètre physique, une comparaison entre la tension de sortie (Vm_p) et une tension de comparaison (Vc) est effectuée par le moyen de comparaison (30) mis en fonction, afin de fournir un signal de commande (Sc) pour déconnecter le condensateur de compensation (Cc), si l'écart entre la tension de sortie (Vm) et la tension de comparaison se trouve au-dessus d'un seuil de tension déterminé, ledit condensateur de compensation restant déconnecté dans les cycles de mesure subséquents tant que l'écart de tension reste supérieur au seuil de tension.

9. Procédé selon la revendication 8, **caractérisé en ce que** la comparaison effectuée par le moyen de comparaison pour contrôler si l'écart entre la tension de sortie (Vm_p) et la tension de comparaison (Vc) est supérieur au seuil de tension déterminé, dure trois cycles successifs de mesure, et **en ce que** la comparaison dans le moyen de comparaison se répète en continu tant que l'écart de tension reste supérieur au seuil de tension.

10. Procédé selon la revendication 9, **caractérisé en ce que** pour réaliser un cycle de comparaison, il est effectué dans le moyen de comparaison, une première comparaison (Comp 1) en effectuant la tension de sortie (Vm_p) soustraite de la tension de comparaison (Vc), une seconde comparaison (Comp 2) en effectuant la tension de comparaison soustraite de la tension de sortie, si le résultat d'au moins une des soustractions est supérieur au seuil de tension déterminé, le condensateur de compensation est déconnecté par le signal de commande (Sc) fourni par le moyen de comparaison.

**11.** Procédé selon l'une des revendications 8 à 10, pour lequel le circuit électronique comprend un second bloc intégrateur (7) muni d'un second condensateur de compensation (Cc2) et un second bloc d'excitation (6), qui sont de structure équivalente au premier bloc intégrateur (5) et au premier bloc d'excitation (3), mais fonctionnant en alternance, pour une mesure d'un paramètre physique, le procédé comprenant quatre phases (P1, P2, P3, P4) pour chaque cycle successif de mesure d'un paramètre physique consistant à la suite des première et seconde phases (P1, P2) :

- dans une troisième phase (P3) à polariser chaque électrode fixe des condensateurs (C1, C2) du capteur à la tension de sortie (Vm_n) du second bloc intégrateur par l'intermédiaire du second bloc d'excitation (6), et
- dans une quatrième phase (P4) à polariser par l'intermédiaire du second bloc d'excitation (6), chaque électrode fixe des condensateurs (C1, C2) du capteur d'une part à la tension haute ($V_{DD}$) pour une des électrodes fixes et à la tension basse ($V_{SS}$) pour l'autre électrode fixe et de manière inverse à la polarisation de ces électrodes à la seconde phase,

**caractérisé en ce que** durant les cycles de mesure du paramètre physique, le moyen de comparaison effectue une comparaison entre la tension de sortie (Vm_p) du premier bloc intégrateur et la tension de sortie (Vm_n) du second bloc intégrateur, en tant que tension de comparaison, sur une durée correspondant à trois cycles successifs de mesure, et **en ce que** dans chaque cycle de comparaison, le moyen de comparaison effectue une première comparaison (Comp 1) de la tension de sortie (Vm_p) du premier bloc intégrateur soustraite de la tension de sortie (Vm_n) du second bloc intégrateur, et une seconde comparaison (Comp 2) de la tension de sortie (Vm_n) du second bloc intégrateur soustraite de la tension de sortie (Vm_p) du premier bloc intégrateur, si le résultat d'au moins une des soustractions est supérieur au seuil de tension déterminé, les deux condensateurs de compensation sont déconnectés par un signal de commande (Sc) fourni par le moyen de comparaison (30).

## Claims

**1.** Electronic circuit (1) with a capacitive sensor (2) for measuring a physical parameter, such as an acceleration, angular velocity, force or pressure, wherein the sensor includes at least two differential-mounted capacitors (C1, C2), whose common electrode (Cm) can move relative to each fixed electrode of the two capacitors to alter the capacitive value of each capacitor during measurement of the physical parameter, said electronic circuit having an interface connected to the capacitive sensor, which includes:

- a charge transfer amplifier unit (4) connected to the common electrode (Cm),
- an integrator unit (5) for integrating the charges supplied by the charge transfer amplifier unit and for supplying an output voltage (Vm), said integrator unit (5) including a compensation capacitor (Cc; Cc1) at input, and
- an excitation unit (3) arranged between the output of the integrator unit (5) and the sensor for polarising each fixed electrode of the sensor capacitors at a determined voltage value,

**characterized in that** the electronic circuit interface also includes comparison means (30) for comparing the output voltage (Vm) with a comparison voltage (Vc) so as to control disconnection of the compensation capacitor at the integrator unit (5) input, if the deviation between the output voltage (Vm) and the comparison voltage is above a determined voltage threshold.

**2.** Electronic circuit (1) according to claim 1, **characterized in that** the comparison means is a dynamic comparator (30).

**3.** Electronic circuit (1) according to any of the preceding claims, **characterized in that** the electronic circuit interface also includes:

a a second integrator unit (7) with the same structure as the first integrator unit (5), for integrating the charges supplied by the charge transfer amplifier, wherein said second integrator unit includes at input a second compensation capacitor (Cc2) that can be disconnected like the first compensation capacitor (Cc1) via the comparison means (30) if the deviation between the output voltage (Vm_p) of the first integrator unit and the output voltage (Vm_n) of the second integrator unit, which defines the comparison voltage, is above a determined voltage threshold, the first and second integrator units being arranged to operate alternately and cyclically in each measuring cycle, and
- a second excitation unit (6) arranged between the output of the second integrator unit and the sensor (2) for polarising each fixed electrode of the capacitors (C1, C2) of the sensor at a determined, voltage, value which is inverse of the voltage value controlled by the first excitation unit, the first and second excitation unit being arranged to operate alternately and cyclically in each measuring cycle, each with their respective integrator unit, so that the electronic circuit operates entirely symmetrically to measure the physical parameter.

**4.** Electronic circuit (1) according to claim 3, **characterized in that** each integrator unit (5, 7) has an operational amplifier (11, 21), an integration capacitor (Cf1, Cf2) connected between an inverter input of the amplifier and the amplifier output, a first switch (19, 29) connected between the output of the charge transfer amplifier unit and the inverter input of the amplifier, and a second switch (18, 28) connected between the output of the charge transfer amplifier unit and the non-inverter input of the amplifier, which is polarised at a reference voltage (Vref), each switch of each integrator unit being controlled and alternately closed in each normal measuring cycle of the electronic circuit, **in that** the first and second compensation capacitors (Cc1, Cc2) are connected by a first electrode at the input of the first and second switches (18, 19; 28, 29) of each integrator unit (5, 7), and **in that** a second electrode of each compensation capacitor (Cc1, Cc2) is each connected to the output (Vm_p, Vm_n) of the respective integrator unit by a third switch (18', 28'), and to the reference voltage (Vref) by a fourth switch (19', 29'), the third and fourth switches of each integrator unit being controlled by the control means (30) to open them, and thus disconnect the compensation capacitors, if the voltage deviation between the output voltage of the first integrator unit and the output voltage of the second integrator unit is above the determined voltage threshold.

**5.** Electronic circuit (1) according to any of the preceding claims, **characterized in that** the comparison means, which is a dynamic comparator (30), includes at input a threshold capacitor ($C_T$, $C_{T2}$), connected to a control capacitor ($C_{Vm}$, $C_{Vm2}$), to define a capacitive ratio, which determines, by multiplying by at a voltage value that corresponds to the low potential ($V_{SS}$) subtracted from the high potential ($V_{DD}$) of the supply voltage source the determined voltage threshold

**6.** Electronic circuit (1) according to claim 5, **characterized in that** a first electrode of the threshold capacitor ($C_T$) is connected at input via a first switch (31) of the comparator to the high potential ($V_{DD}$) and via a second switch (32) to the low potential ($V_{SS}$) of the supply voltage source, and **in that**, to define a connection node, a second electrode of the threshold capacitor ($C_T$) is connected to a second electrode of the control capacitor ($C_{Vm}$), whose first electrode is connected, via a third switch (33), to the comparison voltage (Vc) and, via a fourth switch (34), to the output voltage (Vm; Vm_p) of the first integrator unit, the switches being controlled in the dynamic comparator to enable the comparator to compare the output voltage subtracted from the comparison voltage, and the comparison voltage subtracted from the output voltage.

**7.** Electronic circuit (1) according to claim 6, **characterized in that** the connection node of the threshold and control capacitors ($C_T$, $C_{Vm}$) is connected to a gate of a first NMOS transistor (Nm1) and to the drain thereof by a fifth switch (35), the source of said first NMOS transistor being connected to the low potential terminal ($V_{SS}$), **in that** the drain of the first NMOS transistor is connected to the drain of a first PMOS transistor (Pm1), whose source is connected to the high potential terminal ($V_{DD}$), the gate of said first PMOS transistor being polarised by the polarising voltage (Vb), which also polarises the gate of a second PMOS transistor (Pm2), whose source is connected to the high potential terminal ($V_{DD}$), the drain of said second PMOS transistor being connected to the drain of second NMOS transistor (Nm2), whose source is connected to the low potential terminal ($V_{SS}$), and the gate of said second NMOS transistor is connected to the drains of the first NMOS and PMOS transistors, and **in that** the drains of the second NMOS and NMOS transistors are connected to an input of a first D flip-flop (36) clocked by a first clock signal (CK1) and to an input of second D flip-flop (37) clocked by a second clock signal (CK2), the output of each flip-flop being connected to a NOR logic gate (38), whose output supplies the comparator control signal (Sc).

**8.** Method of activating the electronic circuit (1) according to any of the preceding claims, for controlling the level of an output voltage (Vm, Vm__p) of at least one integrator unit, for measuring a physical parameter, the method including at least two phases (P1, P) for each successive measuring cycle, consisting:

- in a first phase (P1) in polarising each fixed electrode of the capacitors (C1, C2) of the sensor at the output voltage (Vm_p) of the integrator unit (5) via the excitation unit (3), and
- in a second phase (P2) in polarising, via the excitation unit (3), the fixed electrode of the first capacitor (C1) at a high voltage ($V_{DD}$) or at a low voltage ($V_{SS}$) of a supply voltage source of the electronic circuit, and in polarising the fixed electrode of the second capacitor (C2) inversely to the fixed electrode of the first capacitor, at a low voltage ($V_{SS}$) or at a high voltage ($V_{DD}$) of the voltage source,

**characterized in that** during successive physical parameter measuring cycles, the activated comparison means (30) compares the output voltage (Vm_p) and a comparison voltage (Vc), so as to supply a control signal (Sc) to disconnect the compensation capacitor (Cc), if the deviation between the output voltage (Vm), and the comparison voltage is above a determined voltage threshold, said compensation capacitor remaining disconnected in the subsequent measuring cycles while the voltage deviation remains higher than the voltage threshold.

9. Method according to claim 8, **characterized in that** the comparison performed by the comparison means to check whether the deviation between the output voltage (Vm_p) and the comparison voltage (Vc) is higher than the determined voltage threshold, lasts for three successive measuring cycles, and **in that** the comparison in the comparison means is continually repeated while the voltage deviation remains greater than the voltage threshold.

10. Method according to claim 9, **characterized in that**, to perform a comparison cycle, the comparison means performs a first comparison (Comp 1), by subtracting the output voltage (Vm_p) from the comparison voltage (Vc), and a second comparison (camp 2), by subtracting the comparison voltage from the output voltage, and if the result of at least one of the subtractions is higher than the determined voltage threshold, the control signal (Sc) supplied by the comparison means disconnects the compensation capacitor.

11. Method according to any of claims 8 to 10, wherein the electronic circuit includes a second integrator unit (7) that has a second compensation capacitor (Cc2) and a second excitation unit (6), which have the same structure as the first integrator unit (5) and the first excitation unit (3), but operate alternately, to measure a physical parameter, the method including four phases (P1, P2, P3, P4) for each successive, physical parameter measuring cycle, which, after the first and second phases (P1, P2), consists:

- in a third phase (P3) in polarising, via the second excitation unit (6), each fixed electrode of the sensor capacitors (C1, C2) at the output voltage (Vm_n) of the second integrator unit, and
- in a fourth phase (P4), in polarising, via the second excitation unit (6), each fixed electrode of the sensor capacitors (C1, C2), with one fixed electrode polarised at the high voltage ($V_{DD}$) and the other fixed electrode at the low voltage ($V_{SS}$), inversely to the polarisation of said electrodes in the second phase,

**characterised in that** during the physical parameter measuring cycles, the comparison means performs a comparison between the first integrator unit output voltage (\Vm_p) and the second integrator unit output voltage (Vm_n), as the comparison voltage, for a duration that corresponds to three successive measuring cycles, and **in that** in each comparison cycle, the comparison means performs a first comparison (Comp 1) of the first integrator unit output voltage (Vm_p) subtracted from the second integrator unit output voltage (Vm_n), and a second comparison (Comp 2) of the second integrator unit output voltage (Vm_n) subtracted from the first integrator unit output voltage (Vm_p), and if the result of at least one of the subtractions is greater than the determined voltage threshold, a control signal (Sc) supplied by the comparison means (30) disconnects the two compensation capacitors.

**Patentansprüche**

1. Elektronische Schaltung (1) mit kapazitivem Sensor (2) für die Messung eines physikalischen Parameters wie etwa einer Beschleunigung, einer Winkelgeschwindigkeit, einer Kraft oder eines Drucks, wobei der Sensor wenigstens zwei differentiell geschaltete Kondensatoren (C1, C2) umfasst, wovon eine gemeinsame Elektrode (Cm) in Bezug auf jede feste Elektrode der zwei Kondensatoren verlagert werden kann, um den Kapazitätswert jedes Kondensators bei der Messung des physikalischen Parameters zu modifizieren, wobei die elektronische Schaltung eine Schnittstelle besitzt, die mit dem kapazitiven Sensor verbunden ist, mit:

- einem Verstärkerblock mit Ladungsübertragung (4), der mit der gemeinsamen Elektrode (Cm) verbunden ist,
- einem Integratorblock (5), um die von dem Verstärkerblock mit Ladungsübertragung gelieferten Ladungen zu integrieren und um eine Ausgangsspannung (Vm) zu liefern, wobei der Integratorblock (5) am Eingang mit einem Kompensationskondensator (Cc; Cc1) versehen ist, und
- einem Erregungsblock (3), der zwischen dem Ausgang des Integratorblocks (5) und dem Sensor angeordnet ist, um jede feste Elektrode der Kondensatoren des Sensors mit einem bestimmten Spannungswert vorzuspannen),

**dadurch gekennzeichnet, dass** die Schnittstelle der elektronischen Schaltung außerdem ein Vergleichsmittel (30) umfasst, um die Ausgangspannung (Vm) mit einer Vergleichsspannung (Vc) zu vergleichen, um die Trennung des Kompensationskondensators am Eingang des Integratorblocks (5) zu befehlen, falls der Abstand zwischen der Ausgangsspannung (Vm) und der Vergleichsspannung über einem bestimmten Spannungsschwellenwert liegt.

2. Elektronische Schaltung (1) nach Anspruch 1, **dadurch gekennzeichnet, dass** das Vergleichsmittel ein dynamischer Komparator (30) ist.

3. Elektronische Schaltung (1) nach einem der vorhergehenden Ansprüche, **dadurch gekennzeichnet, dass** die Schnittstelle der elektronischen Schaltung außerdem umfasst:

   - einen zweiten Integratorblock (7) mit einer zu jener des ersten Integratorblocks (5) äquivalenten Struktur, um die von dem Verstärker mit Ladungsübertragung gelieferten Ladungen zu integrieren, wobei der zweite Integratorblock am Eingang mit einem zweiten Kompensationskondensator (Cc2) versehen ist, der wie der erste Kompensationskondensator (Cc1) durch das Vergleichsmittel (30) getrennt werden kann, falls der Abstand wischen der Ausgangsspannung (Vm_p) des ersten Integratorblocks und der Ausgangsspannung (Vm_n) des zweiten Integratorblocks, die die Vergleichsspannung definiert, über einem bestimmten Spannungsschwellenwert liegt, wobei der erste und der zweite Integratorblock dazu ausgelegt sind, abwechselnd und zyklisch pro Messzyklus zu arbeiten, und
   - einen zweiten Erregungsblock (6), der zwischen dem Ausgang des zweiten Integratorblocks und dem Sensor (2) angeordnet ist, um jede feste Elektrode der Kondensatoren (C1, C2) des Sensors auf einen bestimmten Spannungswert, der zu dem durch den ersten Erregungsblock befohlenen Spannungswert invers ist, vorzuspannen, wobei der erste und der zweite Erregungsblock dazu ausgelegt sind, abwechselnd und zyklisch pro Messzyklus jeweils mit ihrem entsprechenden Integratorblock zu arbeiten, damit die elektronische Schaltung für die Messung des physikalischen Parameters vollständig symmetrisch arbeitet.

4. Elektronische Schaltung (1) nach Anspruch 3, **dadurch gekennzeichnet, dass** jeder Integratorblock (5, 7) einen Operationsverstärker (11, 21), einen Integrationskondensator (Cf1, Cf2), der zwischen einen invertierenden Eingang des Verstärkers und den Ausgang des Verstärkers geschaltet ist, einen ersten Unterbrecher (19, 29), der zwischen den Ausgang des Verstärkerblocks mit Ladungsübertragung und den invertierenden Eingang des Verstärkers geschaltet ist, und einen zweiten Unterbrecher (18, 28), der zwischen den Ausgang des Verstärkerblocks mit Ladungsübertragung und den nicht invertierenden Eingang des Verstärkers geschaltet ist, der auf eine Referenzspannung (Vref) vorgespannt ist, umfasst, wobei jeder Unterbrecher jedes Integratorblocks so gesteuert wird, dass er in jedem normalen Messzyklus der elektronischen Schaltung abwechselnd geschlossen ist, dass der erste und der zweite Kompensationskondensator (Cc1, Cc2) über eine erste Elektrode am Eingang des ersten und des zweiten Unterbrechers (18, 19; 28, 29) jedes Integratorblocks (5, 7) verbunden sind und dass eine zweite Elektrode jedes Kompensationskondensators (Cc1, Cc2) jeweils mit dem Ausgang (Vm_p, Vm_n) des jeweiligen Integratorblocks über einen dritten Unterbrecher (18', 28') und mit der Referenzspannung (Vref) über einen vierten Unterbrecher (19', 29') verbunden ist, wobei der dritte und der vierte Unterbrecher jedes Integratorblocks durch das Steuermittel (30) gesteuert werden, um sie zu öffnen und somit die Kompensationskondensatoren zu trennen, falls der Spannungsabstand zwischen der Ausgangsspannung des ersten Integratorblocks und der Ausgangsspannung des zweiten Integratorblocks über dem bestimmten Spannungsschwellenwert liegt.

5. Elektronische Schaltung (1) nach einem der vorhergehenden Ansprüche, **dadurch gekennzeichnet, dass** das Vergleichsmittel, das ein dynamischer Komparator (30) ist, am Eingang einen Schwellenkondensator ($C_T$, $C_{T2}$) aufweist, der mit einem Steuerkondensator ($C_{Vm}$, $C_{Vm2}$) verbunden ist, um ein Kapazitätsverhältnis zu definieren, das durch Multiplikation mit einem Spannungswert, der dem von dem hohen Potential ($V_{DD}$) der Versorgungsspannungsquelle subtrahieren niedrigen Potential ($V_{SS}$) entspricht, den bestimmten Spannungsschwellenwert bestimmt.

6. Elektronische Schaltung (1) nach Anspruch 5, **dadurch gekennzeichnet, dass** eine erste Elektrode des Schwellenkondensators ($C_T$) am Eingang über einen ersten Unterbrechen (31) des Komparators mit dem hohen Potential ($V_{DD}$) und über einen zweiten Unterbrecher (32) mit dem niedrigen Potential ($V_{SS}$) der Versorgungsspannungsquelle verbunden ist und dass eine zweite Elektrode des Schwellenkondensators ($C_T$), um einen Verbindungsknoten zu definieren, mit einer zweiten Elektrode des Steuerkondensators ($C_{Vm}$) verbunden ist, dessen erste Elektrode über einen dritten Unterbrecher (33) mit der Vergleichsspannung (Vc) und über einen vierten Unterbrecher (34) mit der Ausgangsspannung (Vm; Vm_p) des ersten Integratorblocks verbunden ist, wobei die Unterbrechen in dem dynamischen Komparator gesteuert werden, um dem Komparator zu ermöglichen, die Subtraktion der Ausgangsspannung von der Vergleichsspannung sowie die Subtraktion der Vergleichsspannung von der Ausgangsspannung auszuführen.

7. Elektronische Schaltung (1) nach Anspruch 6, **dadurch gekennzeichnet, dass** der Verbindungsknoten des Schwellenkondensators und des Steuerkondensators ($C_T$, $C_{Vm}$) mit einem Gate eines ersten NMOS-Transistors (Nm1) und mit dessen Drain über einen fünften Unterbrecher (35) verbunden ist, wobei die Source dieses ersten NMOS-Transistors mit dem Anschluss des niedrigen Potentials ($V_{SS}$) verbunden ist, dass der Drain des ersten NMOS-Transistors mit dem Drain eines ersten PMOS-Transistors (Pm1) verbunden ist, dessen Source mit dem Anschluss des hohen Potentials ($V_{DD}$) verbunden ist, wobei das Gate dieses ersten PMOS-Transistors durch eine Vorspannung (Vb) vorgespannt ist, die außerdem das Gate eines zweiten PMOS-Transistors (Pm2) vorspannt, dessen Source mit dem Anschluss des hohen Potentials ($V_{DD}$) verbunden ist, wobei der Drain dieses zweiten PMOS-Transistors mit dem Drain eines zweiten NMOS-Transistors (Nm2) verbunden ist, dessen Source mit dem Anschluss des niedrigen Potentials ($V_{SS}$) verbunden ist, wobei das Gate dieses zweiten NMOS-Transistors mit den Drains des ersten NMOS-Transistors und des ersten PMOS-Transistors verbunden ist, und dass die Drains der zweiten NMOS- und PMOS-Transistoren mit einem Eingang eines ersten D-Flipflops (36), das durch ein erstes Taktsignal (CK1) getaktet wird, und mit einem Eingang eines zweiten D-Flipflops (37), das durch ein zweites Taktsignal (CK2) getaktet wird, verbunden sind, wobei der Ausgang jedes Flipflops mit einem Logikgatter (38) des NOR-Typs verbunden ist, dessen Ausgang das Steuersignal (Sc) des Komparators liefert.

8.  Verfahren zum Betreiben der elektronischen Schaltung (1) nach einem der vorhergehenden Ansprüche für die Steuerung des Pegels einer Ausgangsspannung (Vm, Vm_p) wenigstens eines Integratorblocks (5) für die Messung eines physikalischen Parameters, wobei das Verfahren wenigstens zwei Phasen (P1, P2) für jeden aufeinander folgenden Messzyklus umfasst, der darin besteht:

    - in einer ersten Phase (P1) jede feste Elektrode der Kondensatoren (C1, C2) des Sensors mit der Ausgangsspannung (Vm_p) des Integratorblocks (5) über den Erregungsblock (3) vorzuspannen und
    - in einer zweiten Phase (P2) über den Erregungsblock (3) die feste Elektrode des ersten Kondensators (C1) mit einer hohen Spannung ($V_{DD}$) oder mit einer niedrigen Spannung ($V_{SS}$) einer Versorgungsspannungsquelle der elektronischen Schaltung vorzuspannen und die feste Elektrode des zweiten Kondensators (C2) invers zu der festen Elektrode des ersten Kondensators mit einer niedrigen Spannung ($V_{SS}$) oder mit einer hohen Spannung ($V_{DD}$) der Spannungsquelle vorzuspannen,

    **dadurch gekennzeichnet, dass** während aufeinander folgender Messzyklen des physikalischen Parameters ein Vergleich zwischen der Ausgangsspannung (Vm_p) und einer Vergleichsspannung (Vc) durch das in Betrieb befindliche Vergleichsmittel (30) ausgeführt wird, um ein Steuersignal (Sc) zu liefern, um den Kompensationskondensator (Cc) zu trennen, falls der Abstand zwischen der Ausgangsspannung (Vm) und der Vergleichsspannung oberhalb eines bestimmten Spannungsschwellenwerts liegt, wobei der Korrapensationskondensator in den nachfolgenden Messzyklen getrennt bleibt, sofern der Spannungsabstand über dem Spannungsschwellenwert bleibt.

9.  Verfahren nach Anspruch 8, **dadurch gekennzeichnet, dass** der durch das Vergleichsmittel ausgeführte Vergleich, um zu kontrollieren, ob der Abstand zwischen der Ausgangsspannung (Vm_p) und der Vergleichsspannung (Vc) größer als der bestimmte Spannungsschwellenwert ist, drei aufeinander folgende Messzyklen dauert und dass der Vergleich in dem Vergleichsmittel ununterbrochen wiederholt wird, sofern der Spannungsabstand größer als der Spannungsschwellenwert bleibt.

10. Verfahren nach Anspruch 9, **dadurch gekennzeichnet, dass** für die Ausführung eines Vergleichszyklus in dem Vergleichsmittel ein erster Vergleich (Comp 1) ausgeführt wird, indem die Subtraktion der Ausgangsspannung (Vm_p) von der Vergleichsspannung (Vc) ausgeführt wird, ein zweiter Vergleich (Comp 2) ausgeführt wird, indem die Subtraktion der Vergleichsspannung von der Ausgangsspannung ausgeführt wird, wobei dann, wenn das Ergebnis wenigstens einer der Subtraktionen größer als der bestimmte Spannungsschwellenwert ist, der Kompensationskondensator durch das Steuersignal (Sc), das von dem Vergleichsmittel geliefert wird, getrennt wird.

11. Verfahren nach einem der Ansprüche 8 bis 10, für das die elektronische Schaltung einen zweiten Integratorblock (7), der mit einem zweiten Kompensationskompensator (Cc2) versehen ist, und einen zweiten Erregungsblock (6) umfasst, deren Struktur zu jener des ersten Integratorblocks (5) bzw. des ersten Erregungsblocks (3) äquivalent ist, die jedoch abwechselnd arbeiten, um einen physikalischen Parameter zu messen, wobei das Verfahren vier Phasen (P1, P2, P3, P4) für jeden aufeinander folgenden Messzyklus eines physikalischen Parameters umfasst, die nach der ersten und der zweiten Phase (P1, P2) darin bestehen:

    - in einer dritten Phase (P3) jede feste Elektrode der Kondensatoren (C1, C2) des Sensors mit der Ausgangsspannung (Vm_n) des zweiten Integratorblocks über den zweiten Erregungsblock (6) vorzuspannen und
    - in einer vierten Phase (P4) über den zweiten Erregungsblock (6) jede feste Elektrode der Kondensatoren (C1, C2) des Sensors einerseits mit der hohen Spannung ($V_{DD}$) für eine der festen Elektroden und andererseits mit der niedrigen Spannung ($V_{SS}$) für die andere feste Elektrode und invers zu der Vorspannung dieser Elektroden in der zweiten Phase vorzuspannen,

**dadurch gekennzeichnet, dass** während der Messzyklen des physikalischen Parameters das Vergleichsmittel einen Vergleich zwischen der Ausgangsspannung (Vm_p) des ersten Integratorblocks und der Ausgangsspannung (Vm_n) des zweiten Integratorblocks als Vergleichsspannung während einer Dauer, die drei aufeinander folgenden Messzyklen entspricht, ausführt und dass in jedem Vergleichszyklus das Vergleichsmittel einen ersten Vergleich (COMP 1) der von der Ausgangsspannung (Vm_n) des zweiten Integratorblocks subtrahierten Ausgangsspannung (Vm_p) des ersten Integratorblocks und einen zweiten Vergleich (COMP 2) der von der Ausgangsspannung (Vm_p) des ersten Integratorblocks subtrahierten Ausgangsspannung (Vm_n) des zweiten Integratorblocks ausführt wobei dann, wenn das Ergebnis wenigstens einer der Subtraktionen größer als der bestimmte Spannungsschwellenwert ist, die beiden Korripen-sationskondensatoren durch ein Steuersignal (Sc), das von dem Vergleichsmittel (30) geliefert wird, getrennt werden.

Fig. 1

Fig. 2

Fig. 3

## Fig. 4a

## Fig. 4b

Fig. 5

Fig. 6

Fig. 7a

Fig. 7b

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2720510

- EP 1835263 A

**Littérature non-brevet citée dans la description**

- **MM. H. Leuthold ; F. Rudolph.** *Sensors and actuators,* 1990, vol. A21-A23, 278-281